# EUROPÄISCHE PATENTANMELDUNG

(11) **EP 4 434 781 A1**
(43) Veröffentlichungstag der Anmeldung: **25.09.2024**
(21) Anmeldenummer: 23162938.7
(22) Anmeldetag: 20.03.2023
(51) Int. Cl.: B60H 1/00, B60H 1/32

(54) **AKTIVIEREN EINER TEMPERIERFUNKTION EINER TRANSPORTKÄLTEMASCHINE**

(71) Anmelder: Schmitz Cargobull AG, 48341 Altenberge (DE)
(72) Erfinder: SCHANZMANN, Martin, 46395 Bocholt (DE); WEYRING, Bernd, 48629 Metelen (DE); SCHOLZ, Oliver, 48155 Münster (DE)
(74) Vertreter: Cohausz & Florack

(57) **Zusammenfassung**

Es wird ein Verfahren offenbart, umfassend:
- Erhalten und/oder Erfassen einer Mehrzahl von Temperiereinflussinformationen umfassend:
- wenigstens eine Auftragsinformation, wobei die wenigstens eine Auftragsinformation eine Auftragstemperatur (103b) und eine Auftragszeit (104b), zu der ein Laderaum eines Nutzfahrzeugs (3) die Auftragstemperatur (103b) aufweisen soll, und/oder einen Auftragsort (102b), an dem ein Laderaum eines Nutzfahrzeugs (3) die Auftragstemperatur (103b) aufweisen soll, repräsentiert;
- eine oder mehrere Sensorinformationen, wobei jede der wenigstens einen Sensorinformation wenigstens einen durch einen jeweiligen Nutzfahrzeugsensor des Nutzfahrzeugs (3) erfassten jeweiligen Parameter repräsentiert;

- Bestimmen einer Aktivierungszeit (109) und/oder eines Aktivierungsorts (110) wenigstens teilweise basierend auf der Mehrzahl von Temperiereinflussinformationen, um unter Berücksichtigung der bestimmten Aktivierungszeit (109) und/oder des bestimmten Aktivierungsorts (110) eine Temperierfunktion einer Transportkältemaschine des Nutzfahrzeugs (3) zu aktivieren, wobei die Transportkältemaschine eingerichtet ist, bei aktivierter Temperierfunktion den Laderaum des Nutzfahrzeugs (3) zu temperieren.

## Beschreibung

Beispielhafte Ausführungsformen der Erfindung betreffen Lösungen zum Aktivieren einer Temperierfunktion einer Transportkältemaschine.

Im Stand der Technik sind Nutzfahrzeuge, etwa in Form von Lastkraftwagen, Anhängern oder Sattelaufliegern, bekannt, die insbesondere für den Transport von temperaturempfindlichen Gütern, wie beispielsweise gekühlten oder tiefgekühlten Lebensmitteln, Pharma- und/oder Medizinartikeln und/oder frostempfindlichen Produkten, vorgesehen sind. Entsprechende Nutzfahrzeuge weisen typischerweise eine Transportkältemaschine auf, mit der der zur Aufnahme der zu transportierenden Ladung dienende Laderaum des Nutzfahrzeugs aktiv temperiert, also beispielsweise gekühlt und/oder erwärmt, werden kann. Auf diese Weise können die Temperatur im Laderaum und mithin die Temperatur der im Laderaum aufgenommenen Ladung in einem von der jeweiligen Ladung abhängigen Solltemperaturbereich gehalten und so Qualitätsminderungen der Ladung verhindert werden. Zu diesem Zweck wird der Laderaum häufig auch bereits vor dem Beladen mit der Ladung vortemperiert. Dabei wird typischerweise deutlich vor dem Zeitpunkt der Beladung und mit recht großem zeitlichen Puffer eine entsprechende Temperierfunktion der Transportkältemaschine aktiviert. So kann sichergestellt werden, dass der Laderaum des Nutzfahrzeugs zum Beladezeitpunkt die geforderte Temperatur aufweist. Allerdings zieht ein entsprechendes Vorgehen einen hohen Energieverbrauch und mithin hohe Kosten nach sich.

Eine Aufgabe der vorliegenden Erfindung ist es daher, die oben genannten Nachteile zu überwinden.

Diese Aufgabe wird gelöst durch den Gegenstand der unabhängigen Ansprüche. Vorteilhafte beispielhafte Ausgestaltungen der Erfindung sind den abhängigen Ansprüchen zu entnehmen.

Es wird ein Verfahren offenbart, wobei das Verfahren umfasst:
- Erhalten und/oder Erfassen einer Mehrzahl von Temperiereinflussinformationen umfassend:
   - wenigstens eine Auftragsinformation, wobei die wenigstens eine Auftragsinformation eine Auftragstemperatur und eine Auftragszeit, zu der ein Laderaum eines Nutzfahrzeugs die Auftragstemperatur aufweisen soll, und/oder einen Auftragsort, an dem ein Laderaum eines Nutzfahrzeugs die Auftragstemperatur aufweisen soll, repräsentiert;
   - eine oder mehrere Sensorinformationen, wobei jede der wenigstens einen Sensorinformation wenigstens einen durch einen jeweiligen Nutzfahrzeugsensor des Nutzfahrzeugs erfassten jeweiligen Parameter repräsentiert;
- Bestimmen einer Aktivierungszeit und/oder eines Aktivierungsorts wenigstens teilweise basierend auf der Mehrzahl von Temperiereinflussinformationen, um unter Berücksichtigung der bestimmten Aktivierungszeit und/oder des bestimmten Aktivierungsorts eine Temperierfunktion einer Transportkältemaschine des Nutzfahrzeugs zu aktivieren, wobei die Transportkältemaschine eingerichtet ist, bei aktivierter Temperierfunktion den Laderaum des Nutzfahrzeugs zu temperieren.

Das offenbarte Verfahren ist beispielsweise ein Verfahren zum Bestimmen einer Aktivierungszeit und/oder eines Aktvierungsorts für eine Temperierfunktion einer Transportkältemaschine eines Nutzfahrzeugs.

Das offenbarte Verfahren kann beispielsweise durch ein Nutzfahrzeug und/oder durch Mittel eines Nutzfahrzeugs ausgeführt werden. Bevorzugt ist es jedoch, wenn das Verfahren durch einen Server ausgeführt wird. Dass das Verfahren durch einen Server ausgeführt wird, soll beispielsweise derart verstanden werden, dass der Server alle Schritte des Verfahrens ausführt. Dabei soll unter dem Server (1) eine Servervorrichtung (z.B. die unten offenbarte Servervorrichtung) oder (2) eine Servercloud umfassend mehrere Servervorrichtungen, die miteinander kooperieren, um die Schritte des Verfahrens auszuführen, oder (3) ein virtueller Server verstanden werden. Dabei soll unter einer Servervorrichtung eine physische Vorrichtung mit Hardware-Komponenten verstanden werden.

Ferner wird eine Servervorrichtung offenbart, wobei die Servervorrichtung Mittel eingerichtet zur Ausführung des offenbarten Verfahrens umfasst. Die Servervorrichtung ist beispielsweise eine Servervorrichtung zum Bestimmen einer Aktivierungszeit und/oder eines Aktivierungsorts für eine Temperierfunktion einer Transportkältemaschine eines Nutzfahrzeugs.

Die Mittel der Servervorrichtung können Hardware- und/oder Software-Komponenten umfassen. Die Mittel können beispielsweise wenigstens einen Speicher mit Programanweisungen eines Computerprogramms (z.B. des unten offenbarten Computerprogramms) und wenigstens einen Prozessor ausgebildet zum Ausführen von Programmanweisungen aus dem wenigstens einen Speicher umfassen. Dementsprechend soll auch eine Servervorrichtung als offenbart verstanden werden, die wenigstens einen Prozessor und wenigstens einen Speicher mit Programmanweisungen umfasst, wobei der wenigstens eine Speicher und die Programmanweisungen eingerichtet sind, gemeinsam mit dem wenigstens einen Prozessor, die Servervorrichtung zu veranlassen, das offenbarte Verfahren auszuführen.

Alternativ oder zusätzlich können die Mittel der Servervorrichtung ferner eine oder mehrere Kommunikationsschnittstellen (z.B. eine oder mehrere drahtgebundene und/oder drahtlose Kommunikationsschnittstellen, z.B. eine drahtlose Kommunikationsschnittstelle in Form einer Funkschnittstelle) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte Servervorrichtung auch andere nicht aufgeführte Mittel umfassen kann.

Ferner wird ein Computerprogramm offenbart, wobei das Computerprogramm Programmanweisungen umfasst, die dazu ausgebildet sind, bei Ausführung durch wenigstens einen Prozessor einen Server (z.B. die offenbarte Servervorrichtung) zu veranlassen, das offenbarte Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Ferner wird ein System offenbart, wobei das System umfasst:
- die offenbarte Servervorrichtung; und
- ein Nutzfahrzeug umfassend eine Transportkältemaschine.

Im Folgenden werden die Eigenschaften des offenbarten Verfahrens (im Folgenden auch als "Verfahren" bezeichnet), der offenbarten Servervorrichtung (im Folgenden auch als "Servervorrichtung" bezeichnet), des offenbarten Computerprogramms (im Folgenden auch als "Computerprogramm" bezeichnet) sowie des offenbarten Systems (im Folgenden auch als "System" bezeichnet) - teilweise beispielhaft - beschrieben. Es versteht sich, dass das Verfahren, die Servervorrichtung, das Computerprogramm und das System zueinander korrespondieren, sodass die Offenbarung eines Merkmals für eine dieser Kategorien als Offenbarung eines korrespondierenden Merkmals für die anderen Kategorien verstanden werden soll.

Unter einem Nutzfahrzeug soll zum Beispiel ein Lastkraftwagen, ein Anhänger oder ein Sattelauflieger verstanden werden. Solche Nutzfahrzeuge sind insbesondere für den Transport von Gütern, also der zu transportierenden Ladung, überwiegend im öffentlichen Straßenverkehr vorgesehen. Zu diesem Zweck weisen die Nutzfahrzeuge unterschiedliche Arten von Aufbauten auf, welche der Aufnahme der zu transportierenden Ladung in einem Laderaum dienen. So sind beispielsweise Kofferaufbauten mit festen Seitenwänden, einer festen Stirnwand und einem festen Dach bekannt, welche den Laderaum abschnittsweise begrenzen. Die Rückwand von Kofferaufbauten kann beispielsweise durch zwei Flügeltüren oder ein Rolltor gebildet sein, um den Laderaum darüber bedarfsweise von hinten beladen zu können. Da Kofferaufbauten geschlossen sind und eine hohe thermische Isolation des Laderaums bereitstellen können, sind Kofferaufbauten in besonderem Maße für den Transport von temperaturempfindlicher Ladung, also beispielsweise den sogenannten Kühltransport oder Tiefkühltransport, geeignet. Dementsprechend bietet es sich an, wenn das Nutzfahrzeug einen Kofferaufbau aufweist, der den Laderaum begrenzen kann.

Das Nutzfahrzeug umfasst eine Transportkältemaschine, die beispielsweise an dem Kofferaufbau, insbesondere an der Stirnwand des Kofferaufbaus, befestigt sein kann. Die Transportkältemaschine ist insbesondere eingerichtet, den Laderaum zu temperieren, beispielsweise zu kühlen und/oder zu erwärmen. Zu diesem Zweck kann die Transportkältemaschine einen Kältekreislauf aufweisen, in dem ein Kältemittel im Kreislauf geführt ist. Der Kältekreislauf kann einen Verdichter zum Verdichten des Kältemittels, einen Umgebungswärmeübertrager zum Übertragen von Wärme zwischen dem Kältemittel und der Umgebung des Nutzfahrzeugs, eine Drosseleinrichtung zum Expandieren des Kältemittels und einen Laderaumwärmeübertrager zum Übertragen von Wärme zwischen dem Kältemittel und dem Laderaum aufweisen. Dabei kann das Temperieren des Laderaums durch die Transportkältemaschine erfolgen, indem die Transportkältemaschine einen Strom der im Laderaum enthaltenen, beispielsweise durch Luft gebildeten, Laderaumatmosphäre ansaugt, der dann in dem Laderaumwärmeübertrager gekühlt oder erwärmt wird und sodann in den Laderaum zurückgeblasen wird. Neben einem Kühlbetrieb zum Kühlen des Laderaums kann der Kältekreislauf also auch einen Erwärmungsbetrieb zum Erwärmen des Laderaums bereitstellen. Alternativ oder zusätzlich kann die Transportkältemaschine auch eine beispielsweise elektrische Heizeinrichtung zum Erwärmen des Laderaums, insbesondere des Stroms der Laderaumatmosphäre, aufweisen.

Bei dem offenbarten Verfahren wird eine Mehrzahl, vorzugsweise eine Vielzahl, von Temperiereinflussinformationen erhalten und/oder erfasst. Dabei kann eine Temperiereinflussinformation beispielsweise wenigstens eine Angabe (z.B. eine Größe, einen Zustand und/oder eine Eigenschaft) repräsentieren, die das Temperieren des Laderaums mittels der Transportkältemaschine beeinflusst.

Unter dem Erhalten einer Information (z.B. einer Temperiereinflussinformation) soll beispielsweise verstanden werden, dass die Information von einer entfernten Vorrichtung über eine Kommunikationsverbindung empfangen wird. Alternativ oder zusätzlich kann eine Information auch als Ergebnis eines Bestimmens der Information erhalten werden. Es versteht sich, dass eine Information auch wenigstens teilweise von einer entfernten Vorrichtung über eine Kommunikationsverbindung empfangen und wenigstens teilweise bestimmt werden kann.

Unter dem Erfassen einer Information soll beispielsweise verstanden werden, dass die Information durch einen Sensor, der Teil der Vorrichtung ist, die das Verfahren ausführt, erfasst wird und/oder von einem Sensor, der die Information erfasst hat, erhalten wird.

Die Mehrzahl von Temperiereinflussinformationen umfasst wenigstens eine Auftragsinformation. Die wenigstens eine Auftragsinformation kann insbesondere erhalten werden. Beispielsweise kann die wenigstens eine Auftragsinformation wenigstens teilweise von einem Nutzer (z.B. einem Auftraggeber) erhalten werden, z.B. über ein (Online-)Portal. Grundsätzlich unabhängig davon, ob die wenigstens eine Auftragsinformation erhalten wird oder nicht, kann die wenigstens eine Auftragsinformation wenigstens teilweise basierend auf einer Benutzereingabe bestimmt sein. Ein Auftrag kann beispielsweise ein Transportauftrag zum Transport einer Ladung sein. Dementsprechend kann eine Auftragsinformation beispielsweise eine Transportauftragsinformation sein.

Die wenigstens eine Auftragsinformation repräsentiert eine Auftragstemperatur, die der Laderaum des Nutzfahrzeugs aufweisen soll. Die Auftragstemperatur kann beispielsweise ein einzelner Temperaturwert und/oder ein Temperaturbereich sein, der beispielsweise durch zwei Temperaturwerte (z.B. Temperaturgrenzwerte) definiert sein kann.

Neben der Auftragstemperatur repräsentiert die wenigstens eine Auftragsinformationen eine Auftragszeit, zu der der Laderaum die Auftragstemperatur aufweisen soll, und/oder einen Auftragsort, an dem der Laderaum die Auftragstemperatur aufweisen soll. Die Auftragszeit kann beispielsweise ein Zeitpunkt und/oder ein Zeitraum sein. Unabhängig davon kann die Auftragszeit zweckmäßigerweise eine Beladezeit sein, zu der der Laderaum mit einer Ladung beladen werden soll. Der Auftragsort kann beispielsweise eine geographische Position und/oder ein geographischer Bereich sein. Alternativ oder zusätzlich kann der Auftragsort zweckmäßigerweise ein Beladeort sein, an dem der Laderaum mit einer Ladung beladen werden soll.

Die Mehrzahl von Temperiereinflussinformationen umfasst ferner eine oder mehrere Sensorinformationen. Dabei repräsentiert jede der wenigstens einen Sensorinformation wenigstens einen durch einen jeweiligen Nutzfahrzeugsensor des Nutzfahrzeugs erfassten jeweiligen Parameter. Vorzugsweise umfasst die Vielzahl von Temperiereinflussinformationen eine Vielzahl von Sensorinformationen, die bevorzugt von einer Vielzahl von Nutzfahrzeugsensoren stammen kann.

Wenigstens teilweise basierend auf der Mehrzahl von Temperiereinflussinformationen wird eine Aktivierungszeit und/oder ein Aktivierungsort bestimmt. Die Aktivierungszeit kann beispielsweise ein Aktivierungszeitpunkt und/oder ein Aktivierungszeitraum sein. Ein Aktivierungsort kann beispielsweise eine geographische Position und/oder ein geographischer Bereich, beispielsweise ein Umkreis um eine geographische Position, sein.

Das Bestimmen der Aktivierungszeit und/oder des Aktivierungsorts kann beispielsweise anhand vorgegebener Regeln (z.B. einem vorgegebenen Algorithmus) erfolgen. Die Regeln können beispielsweise vorgeben, welchen Einfluss eine durch eine Temperiereinflussinformation repräsentierte Angabe (z.B. Größe, Eigenschaft und/oder Zustand) auf die bestimmte Aktivierungszeit und/oder den bestimmten Aktivierungsort hat und wie groß dieser Einfluss ist.

Dass ein Bestimmen (z.B. das Bestimmen der Aktivierungszeit und/oder des Aktivierungsorts) wenigstens teilweise basierend auf einer oder mehrerer Informationen (z.B. der Mehrzahl von Temperiereinflussinformationen) erfolgt, soll insbesondere derart verstanden werden, dass wenigstens die eine oder mehreren Informationen beim Bestimmen berücksichtigt werden. Dies schließt jedoch nicht aus, dass noch weitere Information beim Bestimmen berücksichtigt werden können.

Die Aktivierungszeit und/oder der Aktivierungsort wird bestimmt, um unter Berücksichtigung der bestimmten Aktivierungszeit und/oder des bestimmten Aktivierungsorts eine Temperierfunktion der Transportkältemaschine des Nutzfahrzeugs zu aktivieren. Die Transportkältemaschine ist eingerichtet, den Laderaum zu temperieren, wenn die Temperierfunktion aktiviert ist. Dabei muss die Transportkältemaschine den Laderaum bei aktivierter Temperierfunktion nicht zwingend ununterbrochen temperieren. Es kann jedoch bevorzugt sein, wenn die Transportkältemaschine den Laderaum bei aktivierter Temperierfunktion wenigstens so lange kontinuierlich temperiert, bis im Laderaum die Auftragstemperatur erreicht ist. Alternativ oder zusätzlich kann die Temperierfunktion vorzugsweise eine Hochleistungstemperierfunktion sein. Dann kann die Transportkältemaschine den Laderaum bei aktivierter Temperierfunktion beispielsweise mit einer maximalen Temperierleistung der Transportkältemaschine temperieren, zumindest bis im Laderaum die Auftragstemperatur erreicht ist.

Durch das Aktivieren der Temperierfunktion der Transportkältemaschine kann beispielsweise von einer Temperierfunktion der Transportkältemaschine zu einer anderen Temperierfunktion der Transportkältemaschine gewechselt werden. Dabei können sich die Temperierfunktionen beispielsweise hinsichtlich der Temperierleistung, mit der die Transportkältemaschine den Laderaum temperiert, und/oder der Solltemperatur, auf die die Transportkältemaschine den Laderaum temperiert, unterscheiden. Das Wechseln von einer Temperierfunktion zu einer anderen kann sich beispielsweise anbieten, wenn der Laderaum zur Auftragszeit und/oder am Auftragsort mit einer Ladung beladen werden soll, die höhere Anforderungen an die Temperatur im Laderaum stellt, als eine Ladung, mit der der Laderaum aktuell beladen ist.

Besonders bevorzugt ist es jedoch, wenn durch das Aktivieren der Temperierfunktion die Transportkältemaschine an sich aktiviert wird und so vorzugsweise von einem Zustand, in dem die Transportkältemaschine den Laderaum nicht temperiert, in einen Zustand versetzt wird, in dem die Transportkältemaschine den Laderaum temperiert. Dies bietet sich beispielsweise für den in der Praxis besonders häufigen Fall an, dass der Laderaum vor Beginn des Auftrags unbeladen oder lediglich mit nicht temperaturempfindlicher Ladung beladen ist. Das Aktivieren der Transportkältemaschine kann beispielsweise das Starten eines Motors, insbesondere Verbrennungsmotors (z.B. Dieselmotors) umfassen, wobei der Motor eingerichtet sein kann, Komponenten der Transportkältemaschine (z.B. einen Verdichter und/oder einen oder mehrere Lüfter) mit Energie zu versorgen. Alternativ oder zusätzlich kann das Aktivieren der Transportkältemaschine umfassen, dass bewirkt wird, dass ein oder mehrere elektrische Antriebsmotoren mit elektrischer Energie aus einer Batterie versorgt werden, wobei der wenigstens eine elektrische Antriebsmotor zweckmäßigerweise eingerichtet sein kann, einen oder mehrere Komponenten der Transportkältemaschine (z.B. einen Verdichter und/oder einen oder mehrere Lüfter) anzutreiben. Neben dem Aktivieren der Transportkältemaschine kann das Aktivieren der Temperierfunktion ferner das Einschalten der Transportkältemaschine umfassen.

Das Einschalten der Transportkältemaschine bewirkt beispielsweise, dass die Transportkältemaschine mit elektrischer Energie versorgt wird und/oder ein Betriebssystem der Transportkältemaschine geladen wird.

Die Erfindung stellt somit eine Lösung bereit, die es ermöglicht, dass das Aktivieren der Temperierfunktion der Transportkältemaschine zu einer Zeit und/oder an einem Ort erfolgt, die bzw. der im Hinblick auf einen geringen Energieverbrauch sowie ein rechtzeitiges Erreichen der Auftragstemperatur im Laderaum optimiert ist. Dies gilt insbesondere, wenn nicht nur eine Mehrzahl, sondern eine Vielzahl von Temperiereinflussinformationen erhalten und/oder erfasst wird und das Bestimmen der Aktivierungszeit und/oder des Aktivierungsorts wenigstens teilweise basierend auf der Vielzahl von Temperiereinflussinformationen erfolgt. Vor demselben Hintergrund kann es sich dann weiter anbieten, wenn die Vielzahl von Temperiereinflussinformationen nicht nur eine Mehrzahl, sondern eine Vielzahl von Sensorinformationen umfasst.

Weitere Vorteile der offenbarten Erfindung werden nachfolgend anhand beispielhafter Ausführungsformen des offenbarten Verfahrens, der offenbarten Servervorrichtung, des offenbarten Computerprogramms und des offenbarten Systems beschrieben.

In beispielhaften Ausführungsformen umfasst das Verfahren ferner:
- Bestimmen, ob die bestimmte Aktivierungszeit erreicht ist und/oder das Nutzfahrzeug den bestimmten Aktivierungsort erreicht hat;
- wenn bestimmt wird, dass die bestimmte Aktivierungszeit erreicht ist und/oder das Nutzfahrzeug den bestimmten Aktivierungsort erreicht hat, Bewirken des Aktivierens und/oder Aktivieren der Temperierfunktion der Transportkältemaschine.

Das Bestimmen, ob die bestimmte Aktivierungszeit erreicht ist, kann beispielsweise das Vergleichen der aktuellen Zeit mit der bestimmten Aktivierungszeit umfassen.

Alternativ oder zusätzlich kann das Bestimmen, ob der bestimmte Aktivierungsort erreicht ist, beispielsweise das Vergleichen einer aktuellen Nutzfahrzeugposition des Nutzfahrzeugs mit dem bestimmten Aktivierungsort umfassen. Dabei kann die aktuelle Nutzfahrzeugposition beispielsweise die jeweils zuletzt erhaltene und/oder erfasste Nutzfahrzeugposition des Nutzfahrzeugs sein.

Das Bewirken des Aktivierens und/oder das Aktivieren der Temperierfunktion der Transportkältemaschine kann beispielsweise das Bewirken des Aktivierens und/oder das Aktivieren der Transportkältemaschine umfassen, wobei die Transportkältemaschine eingerichtet ist, im aktivierten Zustand den Laderaum zu temperieren. Im nicht aktivierten Zustand temperiert die Transportkältemaschine den Laderaum dann vorzugsweise nicht. So kann der Energieverbrauch der Transportkältemaschine weiter reduziert werden. Das Bewirken des Aktivierens und/oder das Aktivieren der Transportkältemaschine kann beispielsweise das Bewirken des Startens und/oder das Starten eines Motors, insbesondere Verbrennungsmotors (z.B. Dieselmotors) umfassen, welcher mechanisch mit einem Generator gekoppelt und eingerichtet sein kann, den Generator (z.B. permanent) anzutreiben. Der Generator kann dann zweckmäßigerweise eingerichtet sein, Komponenten der Transportkältemaschine, wie beispielsweise einen Verdichter und/oder einen oder mehrere Lüfter, mit elektrischer Energie zu versorgen. Unabhängig vom Starten eines Motors kann das Bewirken des Aktivierens und/oder das Aktivieren der Temperierfunktion der Transportkältemaschine beispielsweise auch das Bewirken des Einschaltens und/oder das Einschalten der Transportkältemaschine umfassen, wobei die Transportkältemaschine im eingeschalteten Zustand mit elektrischer Energie versorgt werden kann. Im nicht eingeschalteten Zustand wird die Transportkältemaschine dann vorzugsweise nicht mit elektrischer Energie versorgt. So wird insgesamt ein besonders geringer Energieverbrauch der Transportkältemaschine ermöglicht.

Unter dem Bewirken des Aktivierens der Temperierfunktion der Transportkältemaschine, dem Bewirken des Aktivierens der Transportkältemaschine, dem Bewirken des Startens des Motors und/oder dem Bewirken des Einschaltens der Transportkältemaschine soll beispielsweise verstanden werden, dass die Transportkältemaschine entsprechend angesteuert wird, beispielsweise durch das Übermitteln einer Steuerinformation an die Transportkältemaschine.

In beispielhaften Ausführungsformen repräsentiert die wenigstens eine Auftragsinformation ferner:
- eine oder mehrere Eigenschaften wenigstens einer Ladung, mit der der Laderaum, insbesondere an dem Auftragsort, beladen werden soll; und/oder
- eine oder mehrere Eigenschaften des Nutzfahrzeugs, insbesondere der Transportkältemaschine; und/oder
- wenigstens eine Route, Distanz und/oder erwartete Fahrtzeit von einer Nutzfahrzeugposition des Nutzfahrzeugs zu dem Auftragsort.

Die Berücksichtigung jeder dieser Angaben beim Bestimmen der Aktivierungszeit und/oder des Aktivierungsorts kann dazu beitragen, das Aktivieren der Temperierfunktion im Hinblick auf einen geringen Energieverbrauch und ein rechtzeitiges Erreichen der Auftragstemperatur im Laderaum zu optimieren.

Die wenigstens eine Eigenschaft der wenigstens einen Ladung kann beispielsweise eine Solltemperatur der Ladung und/oder eine Art der Ladung sein. Die Solltemperatur der Ladung kann beispielsweise angeben, welche Temperatur die Ladung, insbesondere während des Transports, beispielsweise aufgrund gesetzlicher Bestimmungen aufweisen soll. Unabhängig davon kann die Solltemperatur beispielsweise ein einzelner Temperaturwert, z.B. ein Temperaturgrenzwert, und/oder ein Temperaturbereich sein. Unter Berücksichtigung der Solltemperatur der Ladung kann beispielsweise die Auftragstemperatur bestimmt werden. Im einfachsten Fall kann beispielsweise die Auftragstemperatur die Solltemperatur der Ladung sein. Die Art der Ladung kann beispielsweise angeben, ob es sich bei der Ladung z.B. um Lebensmittel (z.B. Obst, Gemüse, Fleisch, Fisch, usw.) und/oder Pharma- und/oder Medizinprodukte handelt. Unter Berücksichtigung der Art der Ladung kann beispielsweise die Solltemperatur der Ladung bestimmt werden, z.B. durch Abrufen der Solltemperatur aus einer entsprechenden Datenbank.

Die Berücksichtigung der wenigstens einen Eigenschaft des Nutzfahrzeugs ermöglicht, dass die Bestimmung der Aktivierungszeit und/oder des Aktivierungsorts für unterschiedliche Nutzfahrzeuge und/oder unterschiedliche Typen von Nutzfahrzeugen optimiert erfolgen kann. Die wenigstens eine Eigenschaft des Nutzfahrzeugs kann beispielsweise ein Typ des Nutzfahrzeugs, eine Kennung (z.B. in Form einer Identifikationsnummer) des Nutzfahrzeugs und/oder eine Größe des Nutzfahrzeugs, beispielsweise eine Größe des Laderaums sein. Mittels des Typs und/oder der Kennung des Nutzfahrzeugs können beispielsweise viele unterschiedliche technische Eigenschaften des Nutzfahrzeugs, die im Hinblick auf die Temperierung des Laderaums relevant sind, bestimmt werden, z.B. durch Abrufen von technischen Eigenschaften des Nutzfahrzeugs aus einer entsprechenden Datenbank. Eine entsprechende technische Eigenschaft des Nutzfahrzeugs ist beispielsweise die Größe des Laderaums des Nutzfahrzeugs.

Besonders bevorzugt ist es, wenn die wenigstens eine Eigenschaft des Nutzfahrzeugs eine oder mehrere Eigenschaften der Transportkältemaschine umfasst. Die Eigenschaften der Transportkältemaschine sind besonders relevant im Hinblick auf die Temperierung des Laderaums. Dabei ermöglich die Berücksichtigung der wenigstens einen Eigenschaft der Transportkältemaschine, dass die Bestimmung der Aktivierungszeit und/oder des Aktivierungsorts für unterschiedliche Transportkältemaschinen und/oder Typen von Transportkältemaschinen optimiert erfolgen kann. Die wenigstens eine Eigenschaft der Transportkältemaschine kann beispielsweise ein Typ der Transportkältemaschine, eine Kennung (z.B. in Form einer Identifikationsnummer) der Transportkältemaschine und/oder eine Solltemperierleistung der Transportkältemaschine bei aktivierter Temperierfunktion umfassen. Mittels des Typs und/oder der Kennung der Transportkältemaschine können beispielsweise viele unterschiedliche im Hinblick auf die Temperierung des Laderaums relevante technische Eigenschaften nicht nur der Transportkältemaschine selbst, sondern auch des Nutzfahrzeugs insgesamt bestimmt werden. Dies kann beispielsweise durch Abrufen von technischen Eigenschaften des Nutzfahrzeugs (z.B. einer Größe des Laderaums) und/oder der Transportkältemaschine aus einer entsprechenden Datenbank erfolgen. Eine entsprechende technische Eigenschaft der Transportkältemaschine ist beispielsweise die Solltemperierleistung der Transportkältemaschine bei aktivierter Temperierfunktion, also insbesondere die Temperierleistung, mit der die Transportkältemaschine den Laderaum temperieren soll, wenn die Temperierfunktion aktiviert ist. Es versteht sich, dass die tatsächliche Temperierleistung von der Solltemperierleistung abweichen kann. Die Temperierleistung der Transportkältemaschine bei aktivierter Temperierfunktion hat besonders großen Einfluss auf die im Laderaum herbeigeführte Temperaturänderung und ist daher von besonderer Bedeutung im Hinblick auf die Bestimmung der Aktivierungszeit und/oder des Aktivierungsorts.

Die Berücksichtigung der Route von einer Nutzfahrzeugposition des Nutzfahrzeugs zu dem Auftragsort kann beispielsweise dazu beitragen, dass Umweltinformationen wie Wetterinformationen und/oder Verkehrsinformationen besonders gezielt in die Bestimmung der Aktivierungszeit und/oder des Aktivierungsorts einbezogen werden können. Die Route kann beispielsweise eine kürzeste und/oder schnellste Route von der Nutzfahrzeugposition zum Auftragsort sein. Unter Berücksichtigung der Distanz und/oder der erwarteten Fahrtzeit von einer Nutzfahrzeugposition des Nutzfahrzeugs zu dem Auftragsort kann zudem ermittelt werden, ob das Nutzfahrzeug voraussichtlich erst nach der Auftragszeit am Auftragsort eintreffen wird und mithin auch die Temperierfunktion erst später aktiviert werden muss, um bei Erreichen des Auftragsorts im Laderaum die Auftragstemperatur zu erreichen.

In beispielhaften Ausführungsformen wird der wenigstens eine durch die wenigstens eine Sensorinformation repräsentierte Parameter durch einen oder mehrere der folgenden Nutzfahrzeugsensoren erfasst:
- Laderaumzustandsensor;
- Laderaumtemperatursensor;
- Laderaumfeuchtesensor;
- Beladungszustandsensor;
- Umgebungszustandsensor;
- Umgebungstemperatursensor;
- Nutzfahrzeugpositionssensor; und/oder
- Kältemittelfüllstandsensor.

Die Berücksichtigung jedes durch die wenigstens eine Sensorinformation repräsentierten Parameters, der durch einen dieser Nutzfahrzeugsensoren erfasst wird, kann beim Bestimmen der Aktivierungszeit und/oder des Aktivierungsorts, die bzw. der hinsichtlich eines geringen Energieverbrauchs und eines rechtzeitigen Erreichens der Auftragstemperatur im Laderaum optimiert ist, nützlich sein.

Ein Laderaumzustandsensor kann beispielsweise einen für einen Zustand im Laderaum des Nutzfahrzeugs charakteristischen Parameter erfassen. Beispielsweise kann ein Laderaumzustandsensor ein Laderaumtemperatursensor sein, der eingerichtet sein kann, einen für eine Temperatur im Laderaum charakteristischen Parameter zu erfassen. Grundsätzlich ist es denkbar, für die Bestimmung der Aktivierungszeit und/oder des Aktivierungsorts nicht auf eine im Laderaum erfasste Temperatur zurückzugreifen, sondern beispielsweise davon auszugehen, dass die Temperatur im Laderaum einer Umgebungstemperatur in der Umgebung des Nutzfahrzeugs entspricht. Bevorzugt ist dies jedoch nicht. Unabhängig von einem Laderaumtemperatursensor kann ein Laderaumzustandsensor beispielsweise ein Laderaumfeuchtesensor sein, der eingerichtet sein kann, einen für eine Luftfeuchtigkeit im Laderaum charakteristischen Parameter zu erfassen. Alternativ oder zusätzlich kann ein Laderaumzustandsensor beispielsweise ein Beladungszustandsensor sein, der eingerichtet sein kann, einen für einen Zustand der im Laderaum angeordneten Ladung, z.B. das Volumen, die Anordnung und/oder das Gewicht der Ladung, charakteristischen Parameter zu erfassen. Diese Zustände der im Laderaum befindlichen Ladung beeinflussen die Geschwindigkeit, mit der die angestrebte Temperaturänderung im Laderaum herbeigeführt werden kann.

Beispielsweise wirkt sich das Volumen und die Anordnung der Ladung im Laderaum auf die Temperaturverteilung im Laderaum aus. Das Gewicht der Ladung beeinflusst die Wärmekapazität der Ladung und mithin die der Ladung zu entziehende oder zuzuführende Wärme. Ein Beladungszustandsensor kann beispielsweise ein Bildsensor, z.B. in Form einer Kamera, und/oder ein Gewichtssensor sein.

Ein Umgebungszustandssensor kann beispielsweise eingerichtet sein, einen für einen Zustand in der Umgebung des Nutzfahrzeugs charakteristischen Parameter zu erfassen. Beispielsweise kann ein Umgebungszustandsensor ein Umgebungstemperatursensor sein, der eingerichtet sein kann, einen für eine Temperatur in der Umgebung des Nutzfahrzeugs charakteristischen Parameter zu erfassen.

Ein Nutzfahrzeugpositionssensor kann beispielsweise eingerichtet sein, einen für eine geographische Position des Nutzfahrzeugs charakteristischen Parameter zu erfassen. Die Berücksichtigung der Nutzfahrzeugposition des Nutzfahrzeugs bei der Bestimmung der Aktivierungszeit und/oder des Aktivierungsorts kann beispielsweise dazu beitragen, dass Umweltinformationen, wie Wetterinformationen und/oder Verkehrsinformationen, gezielt berücksichtigt werden können. Zudem ermöglicht die Nutzfahrzeugposition das Bestimmen einer Route, einer Distanz und/oder einer erwarteten Fahrtzeit von der Nutzfahrzeugposition zu dem Auftragsort. Unabhängig davon kann ein Nutzfahrzeugpositionssensor beispielsweise ein Sensor eines Globalen Satelliten Navigationssystems (z.B. GPS oder Galileo) sein.

Ein Kältemittelfüllstandsensor kann beispielsweise eingerichtet sein, einen für einen Füllstand eines Kältemittels der Transportkältemaschine charakteristischen Parameter zu erfassen. Die Berücksichtigung des Kältemittelfüllstands bei der Bestimmung der Aktivierungszeit und/oder des Aktivierungsorts kann vorteilhaft sein, da sich der Füllstand des Kältemittels auf die Temperierleistung der Transportkältemaschine auswirken kann, beispielsweise wenn der Füllstand einen vorgegebenen Grenzwert unterschreitet.

In beispielhaften Ausführungsformen umfasst die Mehrzahl der Temperiereinflussinformationen ferner:
- eine oder mehrere Umweltinformationen; und/oder
- eine oder mehrere bereitgehaltene Kältemaschineninformationen, wobei jede der wenigstens einen bereitgehaltenen Kältemaschineninformationen wenigstens eine jeweilige Eigenschaft und/oder wenigstens einen jeweiligen Zustand der Transportkältemaschine und/oder einer jeweiligen Komponente der Transportkältemaschine repräsentiert.

Indem neben der wenigstens einen Auftragsinformation und der wenigstens einen Sensorinformation wenigstens eine Umweltinformation und/oder wenigstens eine bereitgehaltene Kältemaschineninformation berücksichtigt wird, kann die Bestimmung der Aktivierungszeit und/oder des Aktivierungsorts im Hinblick auf einen geringen Energieverbrauch und ein rechtzeitiges Erreichen der Auftragstemperatur weiter verbessert werden.

Eine Umweltinformation kann beispielsweise einen oder mehrere Zustände der Umwelt an einem oder mehreren geographischen Orten repräsentieren, z.B. an einer aktuellen und/oder wenigstens einer erwarteten Nutzfahrzeugposition des Nutzfahrzeugs, z.B. entlang einer Route von einer Nutzfahrzeugposition des Nutzfahrzeugs zu dem Auftragsort. Eine Umweltinformation kann beispielsweise eine Wetterinformation sein, die einen oder mehrere Zustände des Wetters (z.B. wenigstens eine Temperatur und/oder wenigstens einen Niederschlag) repräsentieren kann. Alternativ oder zusätzlich kann eine Umweltinformation beispielsweise eine Verkehrsinformation sein, die einen oder mehrere Zustände des Verkehrs (z.B. einen Stau) repräsentieren kann. Verkehrsinformationen können beim Bestimmen der Aktivierungszeit und/oder des Aktivierungsorts beispielsweise für den Fall nützlich sein, dass das Nutzfahrzeug den Auftragsort aufgrund des Verkehrs, z.B. eines Staus, voraussichtlich erst nach der Auftragszeit erreichen wird und dementsprechend auch die Temperierfunktion erst später aktiviert werden muss, damit bei Erreichen des Auftragsorts im Laderaum die Auftragstemperatur erreicht ist. Unabhängig von der Art der Umweltinformation kann eine Umweltinformation insbesondere erhalten werden. Beispielsweise kann eine Umweltinformation von einem externen Anbieter (z.B. von einer Servervorrichtung des externen Anbieters) erhalten werden. Alternativ oder zusätzlich kann eine Umweltinformation von einem anderen Nutzfahrzeug erhalten werden. Beispielsweise kann eine Vielzahl von Umweltinformationen erhalten werden, die jeweils von einem jeweiligen einer Vielzahl von anderen Nutzfahrzeugen stammen.

Die Berücksichtigung der wenigstens einen bereitgehaltenen Kältemaschineninformation bei der Bestimmung der Aktivierungszeit und/oder des Aktivierungsorts bietet den Vorteil, dass auch Eigenschaften und/oder Zustände der Transportkältemaschine und/oder der Komponenten der Transportkältemaschine berücksichtigt werden können, die nicht messbar sind, beispielsweise weil sie temporär nicht messbar, z.B. aufgrund eines ausgeschalteten Sensors, oder weil sie grundsätzlich nicht messbar sind. Die wenigstens eine bereitgehaltene Kältemaschineninformation kann beispielsweise eine Alterungskennlinie und/oder ein Herstellungsdatum der Transportkältemaschine und/oder einer oder mehrerer Komponenten der Transportkältemaschine, z.B. eines Verdichters, repräsentieren. So können Alterungseffekte, wie z.B. eine mit zunehmender Lebensdauer und/oder Betriebsdauer sinkende maximale Leistung, mit in die Bestimmung der Aktivierungszeit und/oder des Aktivierungsorts einbezogen werden. Dabei kann eine Alterungskennlinie beispielsweise angeben, wie sich eine Eigenschaft (z.B. die maximale Leistung) der Transportkältemaschine und/oder einer Komponente der Transportkältemaschine mit zunehmender Lebensdauer und/oder Betriebsdauer voraussichtlich verändert. Alternativ oder zusätzlich zu einer Alterungskennlinie und/oder einem Herstellungsdatum kann die wenigstens eine bereitgehaltene Kältemaschineninformation beispielsweise einen Kältemittelfüllstand repräsentieren, der insbesondere ein Füllstand eines Kältemittels der Transportkältemaschine sein kann. Dies kann sich beispielsweise anbieten, wenn die Kältemaschine und mithin ein Kältemittelfüllstandsensor zum Erfassen des Kältemittelfüllstands ausgeschaltet ist, wenn die Aktivierungszeit und/oder der Aktivierungsort bestimmt wird.

Eine bereitgehaltene Kältemaschineninformation kann beispielsweise eine Kältemaschineninformation sein, die gespeichert worden ist, z.B. in einem Langzeitspeicher. Unabhängig davon kann eine bereitgehaltene Kältemaschineninformation beispielsweise durch das Nutzfahrzeug, etwa eine Komponente des Nutzfahrzeugs, bereitgehalten werden. Alternativ oder zusätzlich ist auch denkbar, dass eine bereitgehaltene Kältemaschineninformation von der das Verfahren ausführenden Servervorrichtung bereitgehalten wird.

Die wenigstens eine bereitgehaltene Kältemaschineninformation wird insbesondere erhalten. Dabei soll unter dem Erhalten einer bereitgehaltenen Kältemaschineninformation beispielsweise verstanden werden, dass die Information von einer entfernten Vorrichtung, beispielsweise dem Nutzfahrzeug, über eine Kommunikationsverbindung empfangen wird. Alternativ oder zusätzlich kann eine bereitgehaltene Kältemaschineninformation jedoch auch erhalten werden, indem sie aus einem Speicher, der Teil der Vorrichtung ist, die das Verfahren ausführt, abgerufen wird.

In beispielhaften Ausführungsformen umfasst das Bestimmen der Aktivierungszeit und/oder des Aktivierungsorts:
- wenigstens zwei Bestimmungsdurchgänge jeweils umfassend:
   - Bestimmen einer Temporäraktivierungszeit und/oder eines Temporäraktivierungsorts wenigstens teilweise basierend auf aktuellen Temperiereinflussinformationen der Mehrzahl von Temperiereinflussinformationen;
   wobei in wenigstens einem der Bestimmungsdurchgänge die aktuellen Temperiereinflussinformationen wenigstens eine abweichende Temperiereinflussinformation umfassen, die sich von den aktuellen Temperiereinflussinformationen des vorhergehenden Bestimmungsdurchgangs unterscheidet;
- Auswählen der in einem der Bestimmungsdurchgänge bestimmten Temporäraktivierungszeit als die bestimmte Aktivierungszeit und/oder des in einem der Bestimmungsdurchgänge bestimmten Temporäraktivierungsorts als den bestimmten Aktivierungsort.

Auf diese Weise können bei der Bestimmung der Aktivierungszeit und/oder des Aktivierungsorts Änderungen der für die Bestimmung maßgeblichen Umstände (z.B. Auftragszeit, Auftragsort, Temperatur im Laderaum, Wetter, etc.) berücksichtigt und so das Bestimmen der Aktivierungszeit und/oder des Aktivierungsorts weiter optimiert werden.

Dass das Bestimmen der Aktivierungszeit und/oder des Aktivierungsorts wenigstens zwei Bestimmungsdurchgänge umfasst, die jeweils den genannten Schritt umfassen, kann beispielsweise derart verstanden werden, dass dieser Schritt im Rahmen der Bestimmung der Aktivierungszeit und/oder des Aktivierungsorts wenigstens zweimal ausgeführt wird. Es versteht sich, dass das Bestimmen der Aktivierungszeit und/oder des Aktivierungsorts zweckmäßigerweise auch mehr als zwei Bestimmungsdurchgänge, insbesondere eine Vielzahl von Bestimmungsdurchgängen, umfassen kann. Dann können die Bestimmungsdurchgänge beispielsweise in regelmäßigen und/oder vorgegebenen Abständen (z.B. zeitlichen Abständen) durchgeführt werden. Alternativ oder zusätzlich kann zweckmäßigerweise im zweiten und jedem weiteren der wenigstens zwei Bestimmungsdurchgänge wenigstens eine der aktuellen Temperiereinflussinformationen eine abweichende Temperiereinflussinformation sein. Unabhängig davon kann der erste der wenigstens zwei Bestimmungsdurchgänge beispielsweise starten, wenn eine vorgegebene Startbedingung (z.B. das Erhalten einer ersten Auftragsinformation) erfüllt ist. Alternativ oder zusätzlich kann der letzte der wenigstens zwei Bestimmungsdurchgänge beispielsweise beendet werden, wenn eine vorgegebene Abbruchbedingung (z.B. das Erreichen der zuletzt bestimmten Temporäraktivierungszeit und/oder das Erreichen des zuletzt bestimmten Temporäraktivierungsorts durch das Nutzfahrzeug) erfüllt ist.

Unter einer aktuellen Temperiereinflussinformation soll beispielsweise die zuletzt erhaltene und/oder erfasste Temperiereinflussinformation einer oder mehrerer erhaltener und/oder erfasster Temperiereinflussinformationen verstanden werden, die Angaben desselben Typs (z.B. Auftragszeitpunkt, Auftragsort, durch einen Nutzfahrzeugsensor erfasster Parameter, usw.) repräsentieren. Dabei ist auch denkbar, dass eine Temperiereinflussinformation, die mehrere Angaben unterschiedlicher Typen repräsentiert, hinsichtlich wenigstens einer der Angaben eine aktuelle Temperiereinflussinformation und hinsichtlich wenigstens einer anderen der Angaben keine aktuelle Temperiereinflussinformation ist. Beispielsweise ist denkbar, dass zunächst eine erste Auftragsinformation, die eine erste Auftragszeit und einen ersten Auftragsort repräsentiert, und danach eine zweite Auftragsinformation, die lediglich eine zweite Auftragszeit repräsentiert, erhalten werden. Dann kann die erste Auftragsinformation eine aktuelle Temperiereinflussinformation im Hinblick auf den Auftragsort und die zweite Auftragsinformation eine aktuelle Temperiereinflussinformation im Hinblick auf die Auftragszeit sein.

In jedem der wenigstens zwei Bestimmungsdurchgänge können die aktuellen Temperiereinflussinformationen zweckmäßigerweise wenigstens eine Auftragsinformation, die wenigstens eine Auftragstemperatur und eine Auftragszeit und/oder einen Auftragsort repräsentiert, und wenigstens eine Sensorinformation umfassen. Unabhängig davon kann im zweiten und jedem weiteren der wenigstens zwei Bestimmungsdurchgänge das Bestimmten der Temporäraktivierungszeit und/oder des Temporäraktivierungsorts, abgesehen von der wenigstens einen abweichenden Temperiereinflussinformation, beispielsweise wenigstens teilweise basierend auf den aktuellen Temperiereinflussinformationen des vorhergehenden Bestimmungsdurchgangs erfolgen. Im zweiten und jedem weiteren der wenigstens zwei Bestimmungsdurchgänge können die aktuellen Temperiereinflussinformationen also wenigstens teilweise dieselben sein wie in dem jeweils vorhergehenden Bestimmungsdurchgang.

Dass sich die wenigstens eine abweichende Temperiereinflussinformation von den aktuellen Temperiereinflussinformationen des vorhergehenden Bestimmungsdurchgangs unterscheidet, soll beispielsweise derart verstanden werden, dass sich eine durch die abweichende Temperiereinflussinformation repräsentierte Angabe (z.B. Auftragszeit, Auftragsort, durch einen Nutzfahrzeugsensor erfasster Parameter, usw.) von den Angaben unterscheidet, die durch die aktuellen Temperiereinflussinformationen des vorhergehenden Bestimmungsdurchgangs repräsentiert werden. Dabei kann sich beispielsweise der Typ der Angaben unterscheiden. Beispielsweise kann die abweichende Temperiereinflussinformation einen Auftragsort repräsentieren, wogegen die aktuellen Temperiereinflussinformationen des vorhergehenden Bestimmungsdurchgangs keinen Auftragsort repräsentieren. Alternativ oder zusätzlich kann sich beispielsweise der Wert der Angaben unterscheiden. Beispielsweise kann die abweichende Temperiereinflussinformation einen Auftragsort repräsentieren, der sich von dem Auftragsort unterscheidet, der durch die aktuellen Temperiereinflussinformationen des vorhergehenden Bestimmungsdurchgangs repräsentiert wird.

Die wenigstens eine abweichende Temperiereinflussinformation kann beispielsweise wenigstens eine Auftragsinformation umfassen. So können bei der Bestimmung der Aktivierungszeit und/oder des Aktivierungsorts Auftragsänderungen, z.B. eine Änderung der Auftragszeit, des Auftragsorts und/oder der Ladung, mit der der Laderaum beladen werden soll, berücksichtigt werden. Dementsprechend kann die wenigstens eine abweichende Auftragsinformation beispielsweise eine Auftragszeit, einen Auftragsort und/oder eine Eigenschaft einer Ladung, mit der der Laderaum beladen werden soll, repräsentieren. Alternativ oder zusätzlich zu einer Auftragsinformation kann die wenigstens eine abweichende Temperiereinflussinformation beispielsweise wenigstens eine Sensorinformation umfassen. So können bei der Bestimmung der Aktivierungszeit und/oder des Aktivierungsorts Änderungen wenigstens eines durch einen Nutzfahrzeugsensor (z.B. einen Laderaumtemperatursensor) erfassten Parameters berücksichtigt werden. Alternativ oder zusätzlich kann die wenigstens eine abweichende Temperiereinflussinformation beispielsweise auch wenigstens eine Umweltinformation, insbesondere Wetterinformation und/oder Verkehrsinformation, umfassen. So können bei der Bestimmung der Aktivierungszeit Änderungen der Umwelt, z.B. des Wetters und/oder Verkehrs, berücksichtigt werden. Es versteht sich, dass bei mehr als zwei Bestimmungsdurchgängen die abweichenden Temperiereinflussinformationen unterschiedlicher Bestimmungsdurchgänge auch unterschiedliche Arten von Informationen umfassen können.

Das Auswählen der in einem der wenigstens zwei Bestimmungsdurchgänge bestimmten Temporäraktivierungszeit als die bestimmte Aktivierungszeit und/oder des in einem der Bestimmungsdurchgänge bestimmten Temporäraktivierungsorts als den bestimmten Aktivierungsort kann beispielsweise dadurch erfolgen, dass die entsprechende Temporäraktivierungszeit und/oder der entsprechende Temporäraktivierungsort weiter verwendet wird, um die Temperierfunktion der Transportkältemaschine zu aktivieren. Unabhängig davon kann es zweckmäßig sein, wenn die zuletzt bestimmte Temporäraktivierungszeit als die bestimmte Aktivierungszeit und/oder der zuletzt bestimmte Temporäraktivierungsort als der bestimmte Aktivierungsort ausgewählt wird. Die zuletzt bestimmte Temporäraktivierungszeit kann beispielsweise die im letzten der Bestimmungsdurchgänge bestimmte Temporäraktivierungszeit sein. Alternativ oder zusätzlich kann der zuletzt bestimmte Temporäraktivierungsort beispielsweise der im letzten der Bestimmungsdurchgänge bestimmte Temporäraktivierungsort sein. Zwingend erforderlich ist dies jedoch nicht, beispielsweise wenn im letzten Bestimmungsdurchgang keine Temporäraktivierungszeit und/oder kein Temporäraktivierungsort bestimmt wird.

In beispielhaften Ausführungsformen umfasst wenigstens einer der Bestimmungsdurchgänge ferner:
- Bestimmen, wenigstens teilweise basierend auf der wenigstens einen abweichenden Temperiereinflussinformation, ob die Temporäraktivierungszeit und/oder der Temporäraktivierungsort bestimmt werden soll, wobei das Bestimmen der Temporäraktivierungszeit und/oder des Temporäraktivierungsorts nur dann erfolgt, wenn bestimmt wird, dass die Temporäraktivierungszeit und/oder der Temporäraktivierungsort bestimmt werden soll.

Auf diese Weise kann sichergestellt werden, dass in dem wenigstens einen der Bestimmungsdurchgänge die Temporäraktivierungszeit und/oder der Temporäraktivierungsort nur dann bestimmt wird, wenn die wenigstens eine abweichende Temperiereinflussinformation dies rechtfertigt. So wird weniger häufig eine Temporäraktivierungszeit und/oder ein Temporäraktivierungsort bestimmt, sodass letztlich Rechenleistung eingespart werden kann. Aus diesen Gründen kann es besonders bevorzugt sein, wenn alle außer dem ersten der wenigstens zwei Bestimmungsdurchgänge den vorgenannten Schritt umfassen.

Das Bestimmen, ob die Temporäraktivierungszeit und/oder der Temporäraktivierungsort bestimmt werden soll, kann ferner zweckmäßigerweise wenigstens teilweise basierend auf wenigstens einer der aktuellen Temperiereinflussinformationen des vorhergehenden Bestimmungsdurchgangs erfolgen. Dann ist beispielsweise eine Voraussetzung dafür, dass bestimmt wird, dass die Temporäraktivierungszeit und/oder der Temporäraktivierungsort bestimmt werden soll, dass die Abweichung zwischen wenigstens einer durch die wenigstens eine abweichende Temperiereinflussinformation repräsentierten Angabe (z.B. Auftragsort, Auftragszeit, für eine Temperatur im Laderaum charakteristischer Parameter, usw.) und wenigstens einer entsprechenden, durch die wenigstens eine aktuelle Temperiereinflussinformation des vorhergehenden Bestimmungsdurchgangs repräsentierten Angabe größer als ein vorgegebener Grenzwert ist. Dabei sollen unter entsprechenden Angaben beispielsweise Angaben des gleichen Typs verstanden werden.

In beispielhaften Ausführungsformen umfasst wenigstens einer der Bestimmungsdurchgänge ferner:
- Bestimmen, wenigstens teilweise basierend auf der bestimmten Temporäraktivierungszeit und der im vorhergehenden Bestimmungsdurchgang bestimmten Temporäraktivierungszeit und/oder dem bestimmten Temporäraktivierungsort und dem im vorhergehenden Bestimmungsdurchgang bestimmten Temporäraktivierungsort, ob eine Benachrichtigungsaktion ausgelöst werden soll;
- wenn bestimmt wird, dass die Benachrichtigungsaktion ausgelöst werden soll, Bewirken des Auslösens und/oder Auslösen der Benachrichtigungsaktion.

Zum Beispiel ist eine Voraussetzung dafür, dass bestimmt wird, dass die Benachrichtigungsaktion ausgelöst werden soll, dass eine zeitliche Differenz zwischen der bestimmten Temporäraktivierungszeit und der im vorhergehenden Bestimmungsdurchgang bestimmten Temporäraktivierungszeit und/oder ein geographischer Abstand zwischen dem bestimmten Temporäraktivierungsort und dem im vorhergehenden Bestimmungsdurchgang bestimmten Temporäraktivierungsort größer als ein vorgegebener Grenzwert ist. Unabhängig davon kann es zweckmäßig sein, wenn alle außer dem ersten der wenigstens zwei Bestimmungsdurchgänge die vorstehend genannten Schritte umfassen.

Eine Benachrichtigungsaktion kann beispielsweise umfassen, dass einem Nutzer, beispielsweise einem Fahrer des Nutzfahrzeugs und/oder einem Auftraggeber, eine Benachrichtigungsinformation bereitgestellt wird. Die Benachrichtigungsinformation kann beispielsweise eine Information über die bestimmte Temporäraktivierungszeit und die im vorhergehenden Bestimmungsdurchgang bestimmte Temporäraktivierungszeit, z.B. in Form der zeitlichen Differenz, und/oder über den bestimmten Temporäraktivierungsort und den im vorhergehenden Bestimmungsdurchgang bestimmten Temporäraktivierungsort, beispielsweise in Form des (z.B. geographischen) Abstands, sein. Unabhängig davon kann die Benachrichtigungsinformation dem Nutzer beispielsweise an der Transportkältemaschine (z.B. über einen Bildschirm), in einer Fahrerkabine des Nutzfahrzeugs (z.B. über einen Bildschirm), über ein (Online-)Portal, per E-Mail, per SMS und/oder über eine (Smartphone-)Applikation bereitgestellt werden.

In beispielhaften Ausführungsformen umfasst das Verfahren ferner:
- Bereitstellen wenigstens einer Aktivierungsinformation, wobei die wenigstens eine Aktivierungsinformation wenigstens die bestimmte Aktivierungszeit und/oder den bestimmten Aktivierungsort repräsentiert und wenigstens teilweise die Mehrzahl von Temperiereinflussinformationen umfasst.

Unter dem Bereitstellen der wenigstens einen Aktivierungsinformation soll beispielsweise verstanden werden, dass die wenigstens eine Aktivierungsinformation erzeugt und gespeichert wird, beispielsweise in einem Langzeitspeicher (z.B. einem Langzeitspeicher der Servervorrichtung). Unabhängig davon kann die wenigstens eine Aktivierungsinformation beispielsweise nicht nur einen Teil, sondern jede der Mehrzahl von Temperiereinflussinformationen umfassen. Alternativ oder zusätzlich kann für den Fall, dass das Bestimmen der Aktivierungszeit und/oder des Aktivierungsorts die wenigstens zwei Bestimmungsdurchgänge umfasst, die wenigstens eine Aktivierungsinformation zweckmäßigerweise ferner die wenigstens eine bestimmte Temporäraktivierungszeit und/oder den wenigstens einen bestimmten Temporäraktivierungsort repräsentieren.

In beispielhaften Ausführungsformen umfasst das Verfahren ferner:
- Bereithalten einer Vielzahl von historischen Aktivierungsinformationen, die von einer Vielzahl von Nutzfahrzeugen stammen, wobei jede der historischen Aktivierungsinformationen für ein jeweiliges der Nutzfahrzeuge wenigstens eine bestimmte Aktivierungszeit und/oder einen bestimmten Aktivierungsort repräsentiert und eine Mehrzahl von Temperiereinflussinformationen umfasst, unter Berücksichtigung derer die bestimmte Aktivierungszeit und/oder der bestimmte Aktivierungsort bestimmt worden ist, wobei das Bestimmen der Aktivierungszeit und/oder des Aktivierungsorts ferner wenigstens teilweise basierend auf der Vielzahl von historischen Aktivierungsinformationen erfolgt.

Durch die Berücksichtigung entsprechender historischer Aktivierungsinformationen kann das Bestimmen der Aktivierungszeit und/oder des Aktivierungsorts im Hinblick auf den Energieverbrauch und ein rechtzeitiges Erreichen der Auftragstemperatur im Laderaum des Nutzfahrzeugs weiter optimiert werden. Dies gilt insbesondere, wenn die historischen Aktivierungsinformationen teilweise von dem Nutzfahrzeug stammen, für das die Aktivierungszeit und/oder der Aktivierungsort bestimmt wird. Historische Aktivierungsinformationen von anderen Nutzfahrzeugen können besonders nützlich sein, wenn die Nutzfahrzeuge ähnliche technische Eigenschaften wie das Nutzfahrzeug aufweisen, für das die Aktivierungszeit und/oder der Aktivierungsort bestimmt wird. Dementsprechend kann es sich anbieten, wenn das Nutzfahrzeug, für das die Aktivierungszeit und/oder der Aktivierungsort bestimmt wird, und die Vielzahl von Nutzfahrzeugen, von denen die historischen Aktivierungsinformationen stammen, wenigstens im Wesentlichen gleichartig ausgebildet sind.

Unabhängig von den Nutzfahrzeugen, von denen die historischen Aktivierungsinformationen stammen, kann die Mehrzahl der Temperiereinflussinformationen jeder der historischen Aktivierungsinformationen zweckmäßigerweise wenigstens eine Auftragsinformation und eine oder mehrere von dem jeweiligen Nutzfahrzeug stammende Sensorinformationen umfassen. Zudem kann die Mehrzahl der Temperiereinflussinformationen jeder der historischen Aktivierungsinformationen einen oder mehrere Umweltinformationen und/oder eine oder mehrere die Transportkältemaschine des jeweiligen Nutzfahrzeugs betreffende bereitgehaltene Kältemaschineninformation umfassen.

Die historischen Aktivierungsinformationen können beispielsweise bereitgehalten werden, indem sie gespeichert werden, beispielsweise in einem Langzeitspeicher (z.B. in einem Langzeitspeicher der Servervorrichtung).

In beispielhaften Ausführungsformen umfasst das Verfahren ferner einen oder mehrere Überprüfungsdurchgänge jeweils umfassend:
- Erhalten und/oder Erfassen, insbesondere nach dem Bestimmen der Aktivierungszeit und/oder des Aktivierungsorts, wenigstens einer weiteren Temperiereinflussinformation;
- Bestimmen, wenigstens teilweise basierend auf der wenigstens einen weiteren Temperiereinflussinformation, ob voraussichtlich wenigstens im Wesentlichen bei Erreichen einer aktuellen Auftragszeit und/oder eines aktuellen Auftragsorts im Laderaum des Nutzfahrzeugs wenigstens im Wesentlichen eine aktuelle Auftragstemperatur erreicht wird;
- wenn bestimmt wird, dass voraussichtlich nicht wenigstens im Wesentlichen bei Erreichen der aktuellen Auftragszeit und/oder des aktuellen Auftragsorts im Laderaum des Nutzfahrzeugs wenigstens im Wesentlichen die aktuelle Auftragstemperatur erreicht wird, Bewirken eines Veränderns und/oder Verändern einer Temperierleistung der Transportkältemaschine.

Auf diese Weise kann sichergestellt werden, dass die aktuelle Auftragstemperatur im Laderaum des Nutzfahrzeugs wenigstens im Wesentlichen dann erreicht wird, wenn die aktuelle Auftragszeit erreicht wird und/oder das Nutzfahrzeug den aktuellen Auftragsort erreicht. Das Bestimmen, ob voraussichtlich wenigstens im Wesentlichen bei Erreichen der aktuellen Auftragszeit und/oder des aktuellen Auftragsorts im Laderaum wenigstens im Wesentlichen die aktuelle Auftragstemperatur erreicht wird, kann beispielsweise umfassen, dass bestimmt wird, ob voraussichtlich vor oder nach dem Erreichen der aktuellen Auftragszeit und/oder des aktuellen Auftragsorts im Laderaum wenigstens im Wesentlichen die aktuelle Auftragstemperatur erreicht wird. Wenn dann bestimmt wird, dass voraussichtlich vor dem Erreichen der aktuellen Auftragszeit und/oder des aktuellen Auftragsorts im Laderaum wenigstens im Wesentlichen die aktuelle Auftragstemperatur erreicht wird, kann ein Verringern der Temperierleistung der Transportkältemaschine bewirkt und/oder ausgeführt werden. So kann der Energieverbrauch der Transportkältemaschine weiter verringert werden.

Alternativ oder zusätzlich kann, wenn bestimmt wird, dass voraussichtlich nach dem Erreichen der aktuellen Auftragszeit und/oder des aktuellen Auftragsorts im Laderaum wenigstens im Wesentlichen die aktuelle Auftragstemperatur erreicht wird, ein Steigern der Temperierleistung der Transportkältemaschine bewirkt und/oder ausgeführt werden. Auf diese Weise kann sichergestellt werden, dass im Laderaum rechtzeitig die aktuelle Auftragstemperatur erreicht wird.

Dass das Verfahren wenigstens einen Überprüfungsdurchgang umfasst, der jeweils die genannten Schritte umfasst, kann beispielsweise derart verstanden werden, dass diese Schritte im Rahmen des Verfahrens wenigstens einmal ausgeführt werden. Es versteht sich, dass das Verfahren zweckmäßigerweise auch mehrere Überprüfungsdurchgänge, insbesondere eine Vielzahl von Überprüfungsdurchgängen, umfassen kann. Dann können die Überprüfungsdurchgänge beispielsweise in regelmäßigen und/oder vorgegebenen Abständen (z.B. zeitlichen Abständen) wiederholt werden. Unabhängig von der Anzahl kann der erste des wenigstens einen Überprüfungsdurchgangs beispielsweise gestartet werden, wenn eine vorgegebene Startbedingung (z.B. ein vorgegebener Abstand, z.B. zeitlicher und/oder geographischer Abstand, nach der bestimmten Aktivierungszeit und/oder dem bestimmten Aktivierungsort) erfüllt ist. Alternativ oder zusätzlich kann der letzte des wenigstens einen Überprüfungsdurchgangs beispielsweise beendet werden, wenn eine vorgegebene Abbruchbedingung, (z.B. das Erreichen des aktuellen Auftragszeit und/oder des aktuellen Auftragsorts durch das Nutzfahrzeug) erfüllt ist.

Die wenigstens eine weitere Temperiereinflussinformation ist beispielsweise eine Temperiereinflussinformation, die erst nach dem Bestimmen der Aktivierungszeit und/oder des Aktivierungsorts erhalten und/oder erfasst und mithin beim Bestimmen der Aktivierungszeit und/oder des Aktivierungsorts nicht berücksichtigt worden ist. Unabhängig davon kann die wenigstens eine weitere Temperiereinflussinformation beispielsweise wenigstens eine weitere Auftragsinformation, eine oder mehrere weitere Sensorinformationen, eine oder mehrere weitere Umweltinformationen und/oder eine oder mehrere weitere bereitgehaltene Kältemaschineninformationen umfassen. Abgesehen von der wenigstens einen weiteren Temperiereinflussinformation kann das Bestimmen, ob voraussichtlich wenigstens im Wesentlichen bei Erreichen der aktuellen Auftragszeit und/oder des aktuellen Auftragsorts im Laderaum wenigstens im Wesentlichen die aktuelle Auftragstemperatur erreicht wird, wenigstens teilweise basierend auf den Temperiereinflussinformationen erfolgen, unter deren Berücksichtigung die Aktivierungszeit und/oder der Aktivierungsort bestimmt worden ist.

Unter der aktuellen Auftragstemperatur, der aktuellen Auftragszeit und/oder dem aktuellen Auftragsort soll beispielsweise die zuletzt erhaltene und/oder erfasste Auftragstemperatur, die zuletzt erhaltene und/oder erfasste Auftragszeit und/oder der zuletzt erhaltene und/oder erfasste Auftragsort verstanden werden. Beispielsweise kann die aktuelle Auftragstemperatur, die aktuelle Auftragszeit und/oder der aktuelle Auftragsort die Auftragstemperatur, die Auftragszeit und/oder der Auftragsort sein, die bzw. der beim Bestimmen der Aktivierungszeit und/oder des Aktivierungsorts berücksichtigt worden ist. Zwingend erforderlich ist dies jedoch nicht, beispielsweise wenn nach dem Bestimmen der Aktivierungszeit und/oder des Aktivierungsorts wenigstens eine weitere Auftragsinformation mit einer Auftragstemperatur, einer Auftragszeit und/oder einem Auftragsort erhalten wird. Es versteht sich, dass in unterschiedlichen Überprüfungsdurchgängen auch unterschiedliche aktuelle Auftragstemperaturen, unterschiedliche aktuelle Auftragszeiten und/oder unterschiedliche aktuelle Auftragsorte berücksichtigt werden können, beispielsweise wenn nach einem der Überprüfungsdurchgänge und vor einem anderen der Überprüfungsdurchgänge eine weitere Auftragsinformation erhalten wird, die eine Auftragstemperatur, eine Auftragszeit und/oder einen Auftragsort repräsentiert.

Unter der Temperierleistung der Transportkältemaschine soll insbesondere die Temperierleistung verstanden werden, mit der die Transportkältemaschine den Laderaum des Nutzfahrzeugs temperiert.

In beispielhaften Ausführungsformen umfasst das Verfahren ferner:
- Bestimmen, ob eine das Aktivieren der Temperierfunktion verhindernde Temperierverhinderungsfunktion aktiviert ist;
- wenn bestimmt wird, dass die Temperierverhinderungsfunktion aktiviert ist, Bewirken eines Auslösens und/oder Auslösen einer Benachrichtigungsaktion.

Eine Benachrichtigungsaktion kann beispielsweise umfassen, dass einem Nutzer, beispielsweise einem Fahrer des Nutzfahrzeugs und/oder einem Auftraggeber, eine Benachrichtigungsinformation bereitgestellt wird. Die Benachrichtigungsinformation kann beispielsweise eine Information darüber sein, dass das Aktivieren der Temperierfunktion verhindert wird. Unabhängig davon kann die Benachrichtigungsinformation dem Nutzer beispielsweise an der Transportkältemaschine (z.B. über einen Bildschirm), in einer Fahrerkabine des Nutzfahrzeugs (z.B. über einen Bildschirm), über ein (Online-)Portal, per E-Mail, per SMS und/oder über eine (Smartphone-)Applikation bereitgestellt werden.

Die Temperierverhinderungsfunktion kann beispielsweise eine Funktion der Transportkältemaschine und/oder des Nutzfahrzeugs sein.

Das Bestimmen, ob die Temperierverhinderungsfunktion aktiviert ist, kann beispielsweise wenigstens teilweise basierend auf einer oder mehreren Temperierverhinderungsinformationen erfolgen, die von einem oder mehreren der folgenden Nutzfahrzeugsensoren des Nutzfahrzeugs stammen:
- Tankfüllstandsensor;
- Batteriesensor; und/oder
- Türöffnungssensor.

Der Tankfüllstandsensor kann beispielsweise eingerichtet sein, einen Parameter zu erfassen, der für einen Füllstand eines Kraftstofftanks (z.B. Dieseltanks) charakteristisch ist, wobei der Kraftstofftank eingerichtet sein kann, einen Verbrennungsmotors der Transportkältemaschine mit Kraftstoff (z.B. Dieselkraftstoff) zu versorgen. Der Batteriesensor kann beispielsweise eingerichtet sein, einen Parameter zu erfassen, der für einen Ladestand einer Batterie charakteristisch ist. Dabei kann die Batterie eingerichtet sein, einen oder mehrere elektrische Antriebsmotoren der Transportkältemaschine mit elektrischer Energie zu versorgen, wobei der wenigstens eine elektrische Antriebsmotor eingerichtet sein kann, einen oder mehrere Komponenten der Transportkältemaschine (z.B. einen Verdichter und/oder einen oder mehrere Lüfter) anzutreiben. Alternativ kann die Batterie eingerichtet sein, elektrische Energie zum Starten eines Verbrennungsmotors der Transportkältemaschine bereitzustellen. Der Türöffnungssensor kann beispielsweise eingerichtet sein, zu erfassen, ob eine Tür des Nutzfahrzeugs, die zum Beladen des Laderaums vorgesehen ist, geöffnet ist. Die Berücksichtigung entsprechender Temperierverhinderungsinformationen kann sich anbieten, da die Temperierverhinderungsfunktion beispielsweise aktiviert sein kann, wenn der Füllstand des Kraftstofftanks und/oder der Ladestand der Batterie einen vorgegebenen Grenzwert unterschreitet und/oder die Tür zum Beladen des Laderaums geöffnet ist.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die Figuren sollen jedoch nur dem Zwecke der Verdeutlichung, nicht aber zur Bestimmung des Schutzbereichs der Erfindung dienen. Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1A-D: eine schematische Darstellung einer beispielhaften Ausführungsform eines Systems gemäß der Erfindung;
- Fig. 2: eine schematische Darstellung einer beispielhaften Ausführungsform einer Servervorrichtung gemäß der Erfindung;
- Fig. 3: eine schematische Darstellung einer beispielhaften Ausführungsform eines Nutzfahrzeugs eines Systems gemäß der Erfindung; und
- Fig. 4A-B: ein Flussdiagramm einer beispielhaften Ausführungsform eines Verfahrens gemäß der Erfindung.

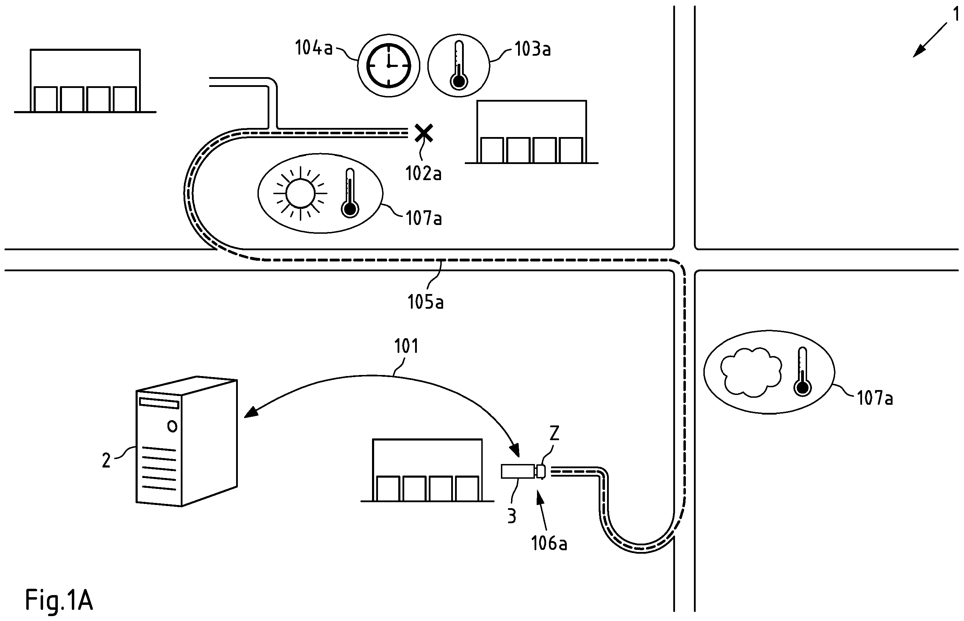

Fig. 1A-D sind eine schematische Darstellung einer beispielhaften Ausführungsform eines Systems 1 gemäß der Erfindung. Das System 1 umfasst eine Servervorrichtung 2 und ein von der Servervorrichtung 2 entferntes Nutzfahrzeug 3 in Form eines Sattelaufliegers 3. Der Sattelauflieger 3 wird von einem als Lastkraftwagen ausgebildeten Zugfahrzeug Z gezogen, das vorliegend nicht Teil des Systems 1 ist. Der Sattelauflieger 3 ist zum Transport von temperaturempfindlicher Ladung in einem nicht dargestellten Laderaum ausgebildet und weist eine ebenfalls nicht dargestellte Transportkältemaschine auf, mittels der der Laderaum aktiv temperiert, also insbesondere gekühlt und erwärmt, werden kann.

Die Servervorrichtung 2 kann über eine Kommunikationsverbindung 101 mit dem Sattelauflieger 3 kommunizieren, z.B. Informationen über die Kommunikationsverbindung 101 empfangen und/oder senden. Beispielsweise kann die Kommunikationsverbindung 101 eine drahtlose Verbindung umfassen, wie zum Beispiel eine Bluetooth-Verbindung, eine WLAN-Verbindung und/oder eine Verbindung über ein Mobilfunkkommunikationssystem wie ein 2G/3G/4G/5G-Kommunikationssystem. Die Bluetooth Spezifikationen können derzeit im Internet unter https://www.bluetooth.com abgerufen werden. WLAN ist zum Beispiel in den Standards der IEEE 802.11-Familie spezifiziert. Die Spezifikationen der 2G-, 3G-, 4G- oder 5G-Mobilfunkkommunkationssysteme werden durch das 3rd Generation Partnership Project (3GPP) entwickelt und können derzeit im Internet unter https://www.3gpp.org/ abgerufen werden.

Es versteht sich, dass die Kommunikationsverbindung 101 neben der drahtlosen Verbindung beispielsweise über das Mobilfunkkommunikationssystem auch eine drahtgebundene Verbindung über ein drahtgebundenes Kommunikationsnetzwerk wie ein lokales Netzwerk (engl.: Local Area Network, LAN), ein Weitverkehrsnetzwerk (engl. Wide Area Network) und/oder das Internet umfassen kann. Ein lokales Netzwerk ist beispielsweise ein Ethernet, das in den Standards der IEEE-802.3-Familie spezifiziert ist, die derzeit im Internet unter https://standards.ieee.org/ abrufbar sind.

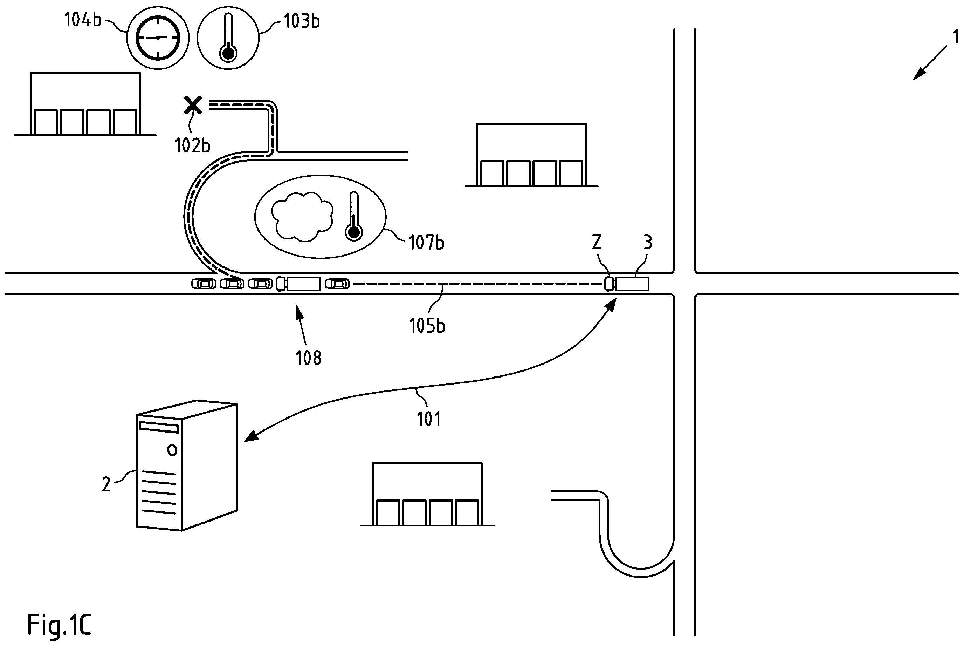

In Fig. 1A-D ist jeweils ein Auftragsort 102a,102b, an dem der Laderaum des Sattelaufliegers 3 mit einer temperaturempfindlichen Ladung (z.B. einer zu kühlenden Ladung) beladen werden und mithin eine Auftragstemperatur 103a,103b aufweisen soll, sowie eine Auftragszeit 104a,104b dargestellt, zu der Laderaum des Sattelaufliegers 3 mit der Ladung beladen werden und mithin die Auftragstemperatur 103a,103b aufweisen soll. Die Auftragsorte 102a,102b stellen mithin Beladeorte 102a,102b und die Auftragszeiten 104a,104b Beladezeiten 104a,104b dar. Ferner ist in Fig. 1A-D jeweils eine beispielhafte Route 105a,105b von einer Position 106a,106b des Sattelaufliegers 3 zum jeweiligen Auftragsort 102a,102b sowie das entlang der Route 105a,105b erwartete Wetter 107a,107b dargestellt. In Fig. 1C ist darüber hinaus ein entlang eines Abschnitts der Route 105b erwarteter Verkehr 108 dargestellt.

In Fig. 1A befindet sich der Sattelauflieger 3 an einer ersten Nutzfahrzeugposition 106a, die z.B. ein Entladeort sein kann, an dem der Sattelauflieger 3 entladen worden ist. Das Zugfahrzeug Z setzt sich zusammen mit dem Sattelauflieger 3 in Bewegung, um entlang einer ersten Route 105a zu einer ersten Auftragszeit 104a zu einem ersten Auftragsort 102a zu gelangen, an dem der Laderaum des Sattelaufliegers 3 eine erste Auftragstemperatur 103a aufweisen soll. Entlang der ersten Route 105a wird ein erstes Wetter 107a erwartet, das in einem Abschnitt der ersten Route 105a bewölkt ist und eine mittlere Temperatur aufweist und entlang eines anderen Abschnitts der ersten Route 105a sonnig ist und eine hohe Temperatur aufweist.

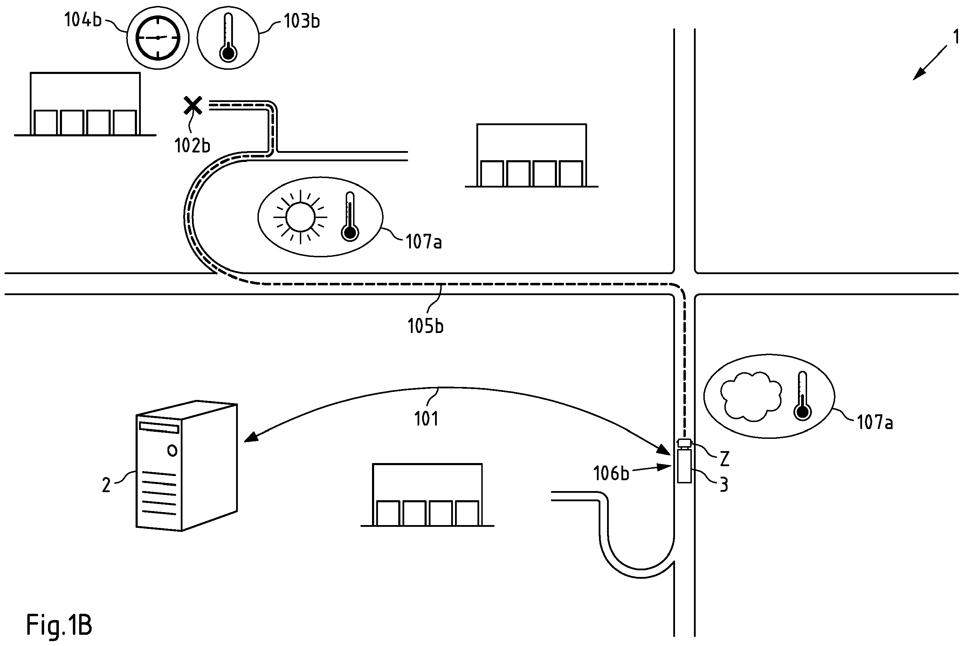

In Fig. 1B hat sich das Zuggespann aus Zugfahrzeug Z und Sattelauflieger 3 entlang der ersten Route 105a bewegt und befindet sich an einer von der ersten Nutzfahrzeugposition 106a abweichenden zweiten Nutzfahrzeugposition 106b. Das Zuggespann aus Zugfahrzeug Z und Sattelauflieger 3 strebt nunmehr einen von dem ersten Auftragsort 102a abweichenden zweiten Auftragsort 102b zu einer von der ersten Auftragszeit 104a abweichenden zweiten Auftragszeit 104b und dabei eine von der ersten Auftragstemperatur 103a abweichende zweite Auftragstemperatur 103b im Laderaum des Sattelaufliegers 3 an. Dementsprechend bewegt sich das Zugfahrzeug Z zusammen mit dem Sattelauflieger 3 auch entlang einer von der ersten Route 105a abweichenden zweiten Route 105b. Das erwartete erste Wetter 107a ist dagegen unverändert geblieben.

In Fig. 1C hat sich das Zugfahrzeug Z zusammen mit dem Sattelauflieger 3 entlang der zweiten Route 105b weiterbewegt. Das Zuggespann aus Zugfahrzeug Z und Sattelauflieger 3 strebt weiterhin den zweiten Auftragsort 102b zu der zweiten Auftragszeit 104b und dabei die zweite Auftragstemperatur 103b im Laderaum des Sattelaufliegers 3 an. Dementsprechend bewegt sich das Zuggespann aus Zugfahrzeug Z und Sattelauflieger 3 auch weiterhin entlang der zweite Route 105b. Allerdings wird entlang des verbleibenden Teils der zweiten Route 105b nunmehr ein von dem ersten Wetter 107a abweichendes zweites Wetter 107b erwartet, das bewölkt ist und eine mittlere Temperatur aufweist. Zudem wird entlang des verbleibenden Teils der zweiten Route 105b nunmehr ein Verkehr 108 in Form eines Staus 108 erwartet.

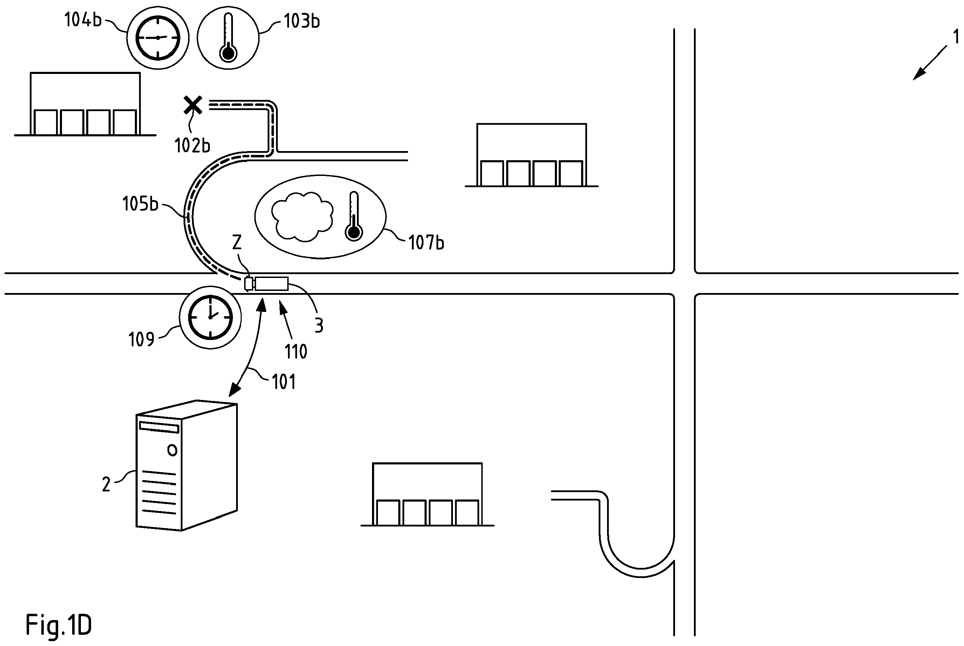

In Fig. 1D hat sich das Zuggespann aus Zugfahrzeug Z und Sattelauflieger 3 entlang der zweiten Route 105b weiterbewegt und strebt nach wie vor den zweiten Auftragsort 102b zu der zweiten Auftragszeit 104b sowie die zweite Auftragstemperatur 103b im Laderaum des Sattelaufliegers 3 an. Zudem wird entlang des verbleibenden Teils der zweiten Route 105b weiterhin das zweite Wetter 107b erwartet. Allerdings ist nun eine Aktivierungszeit 109 erreicht und hat der Sattelauflieger 3 einen Aktivierungsort 110 erreicht. Bei Erreichen der Aktivierungszeit 109 und/oder bei Erreichen des Aktivierungsorts 110 durch den Sattelauflieger 3 wird eine Temperierfunktion der Transportkältemaschine des Sattelaufliegers 3 aktiviert, um den Laderaum des Sattelaufliegers 3 zu kühlen und so bis zum Erreichen des zweiten Auftragsorts 102b und/oder der zweiten Auftragszeit 104b im Laderaum des Sattelaufliegers 3 die zweite Auftragstemperatur 103b zu erreichen.

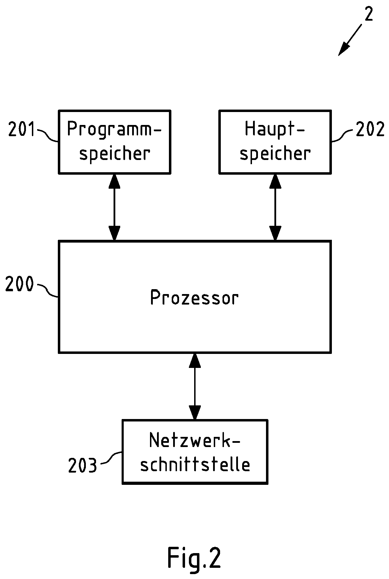

Fig. 2 zeigt eine schematische Darstellung einer beispielhaften Ausführungsform einer Servervorrichtung 2 gemäß der Erfindung. Im Folgenden wird beispielhaft davon ausgegangen, dass die Servervorrichtung 2 des in Fig. 1 dargestellten Systems 1 dieser in Fig. 2 dargestellten Servervorrichtung 2 entspricht.

Die Servervorrichtung 2 umfasst einen Prozessor 200 und verbunden mit dem Prozessor 200 einen ersten Speicher als Programmspeicher 201, einen zweiten Speicher als Hauptspeicher 202 und eine Netzwerkschnittstelle 203.

Unter einem Prozessor soll beispielsweise ein Mikroprozessor (engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (engl. Graphics Processing Unit, GPU) verstanden werden. Es versteht sich, dass die Servervorrichtung 2 auch mehrere Prozessoren 200 umfassen kann.

Der Prozessor 200 führt Programmanweisungen aus, die in dem Programmspeicher 201 gespeichert sind, und speichert beispielsweise Zwischenergebnisse oder Ähnliches in dem Hauptspeicher 202. Die Verwendung eines (zusätzlichen) graphischen Prozessors kann beispielsweise zur Ausführung von Algorithmen zum maschinellen Lernen und/oder künstlichen neuronalen Netzwerken vorteilhaft sein.

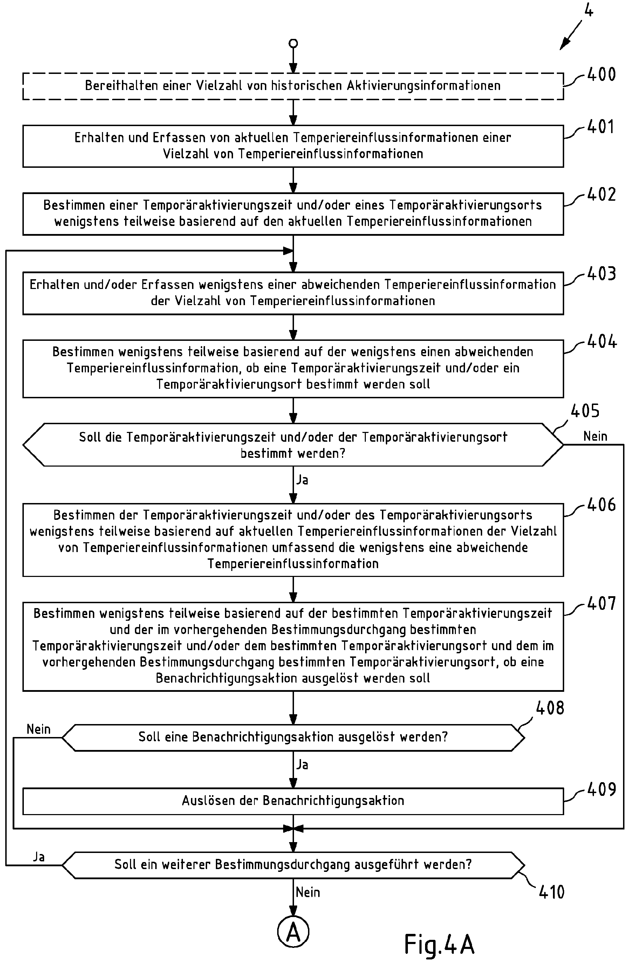

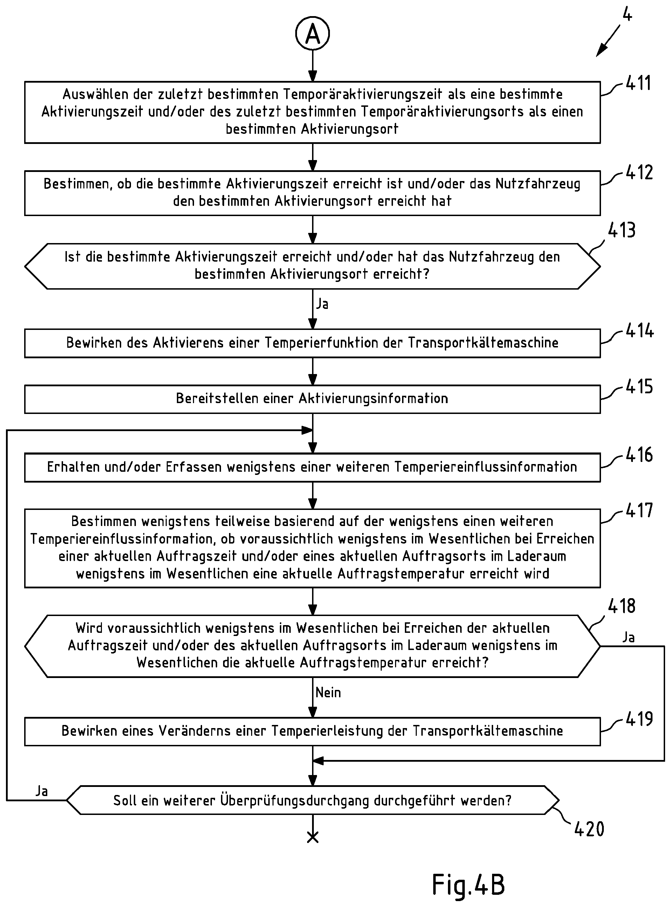

In dem Programmspeicher 201 sind beispielsweise Programmanweisungen gespeichert, die den Prozessor 200, wenn er die Programmanweisungen ausführt, veranlassen, das Verfahren gemäß der Erfindung (beispielsweise das Verfahren gemäß dem in Fig. 4A-B dargestellten Flussdiagramm 4) auszuführen und/oder zu steuern.

Der Programmspeicher 201 enthält ferner beispielsweise das Betriebssystem der Servervorrichtung 2, das beim Starten der Servervorrichtung 2 wenigstens teilweise in den Hauptspeicher 202 geladen und von dem Prozessor 200 ausgeführt wird. Insbesondere wird beim Starten der Servervorrichtung 2 wenigstens ein Teil des Kerns des Betriebssystems in den Hauptspeicher 202 geladen und von dem Prozessor 200 ausgeführt.

Ein Beispiel für ein Betriebssystem ist ein Windows-, UNIX-, Linux-, Android-, Apple iOS- und/oder MAC OS Betriebssystem. Das Betriebssystem ermöglicht insbesondere die Verwendung der Servervorrichtung 2 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Hauptspeicher 202 und der Programmspeicher 201 können auch als ein Speicher ausgebildet sein. Alternativ können der Hauptspeicher 202 und/oder der Programmspeicher 201 jeweils durch mehrere Speicher gebildet werden. Ferner können der Hauptspeicher 202 und/oder der Programmspeicher 201 auch Teil des Prozessors 200 sein.

Der Prozessor 200 steuert die Netzwerkschnittstelle 203, welche beispielsweise eingerichtet ist, über eine Verbindung in einem Kommunikationsnetzwerk Informationen mit einer entfernten Vorrichtung auszutauschen (z.B. zu senden und/oder zu empfangen). Im Folgenden wird beispielhaft davon ausgegangen, dass die Netzwerkschnittstelle 203 eine drahtgebundene Netzwerkschnittstelle ist. Ein Beispiel für eine drahtgebundene Netzwerkschnittstelle ist eine Ethernet-Schnittstelle. Zum Beispiel kann die Servervorrichtung 2 die Netzwerkschnittstelle 203 verwenden, um Informationen (z.B. Temperiereinflussinformationen, Sensorinformationen, bereitgehaltene Kältemaschineninformationen, usw.) über die Kommunikationsverbindung 101 mit dem Nutzfahrzeug 3 des in Fig. 1 dargestellten Systems 1 auszutauschen (z.B. zu senden und/oder zu empfangen).

Die Komponenten 200 bis 203 der Servervorrichtung 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Servervorrichtung 2 neben den Komponenten 200 bis 203 weitere Komponenten (z.B. eine Benutzerschnittstelle) umfassen kann.

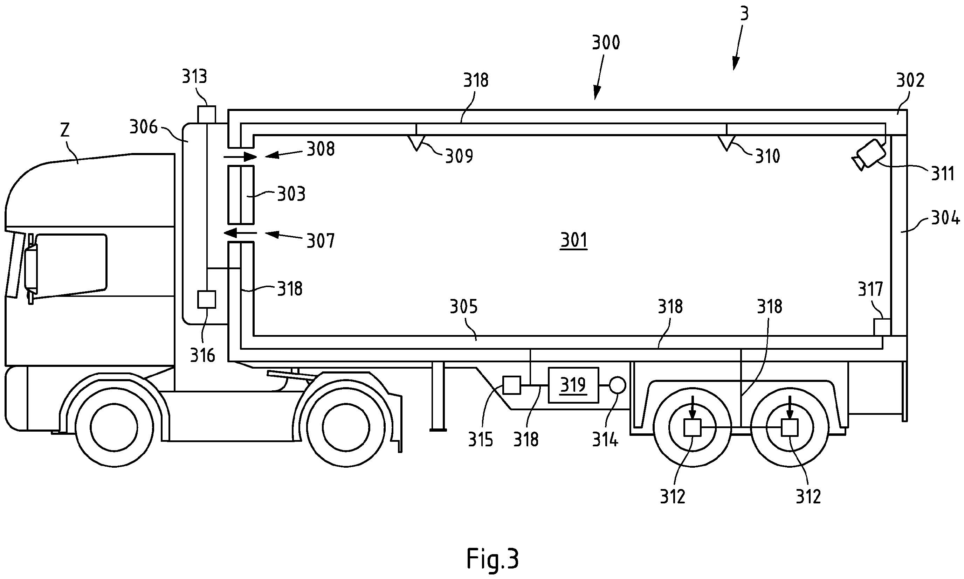

Fig. 3 ist eine schematische Darstellung einer beispielhaften Ausführungsform eines Nutzfahrzeugs 3 eines Systems gemäß der Erfindung. Im Folgenden wird beispielhaft davon ausgegangen, dass das Nutzfahrzeug 3 des in Fig. 1 dargestellten Systems 1 diesem in Fig. 3 dargestellten Nutzfahrzeug 3 entspricht.

Das Nutzfahrzeug 3 ist im dargestellten und insoweit bevorzugten Ausführungsbeispiel als Sattelauflieger 3 ausgebildet und wird von einem Zugfahrzeug Z gezogen, das vorliegend nicht Teil des Nutzfahrzeugs 3 ist. Das Nutzfahrzeug 3 weist einen Kofferaufbau 300 auf, der einen Laderaum 301 abschnittsweise begrenzt. Der Laderaum 301 wird nach oben durch ein festes Dach 302, nach vorne durch eine feste Stirnwand 303, zur Seite durch nicht dargestellte feste Seitenwände und nach hinten durch eine Rückwand 304 des Kofferaufbaus 300 begrenzt. Die Rückwand 304 ist vorliegend durch zwei nicht dargestellte Flügeltüren gebildet. Nach unten ist der Laderaum 301 durch einen Boden 305 begrenzt.

An der Stirnwand 303 des Kofferaufbaus 300 ist eine Transportkältemaschine 306 angeordnet. Die Transportkältemaschine 306 umfasst einen nicht dargestellten Kältekreislauf mit einem Verdichter zum Verdichten eines Kältemittels, einem als Kondensator ausgebildeten Umgebungswärmeübertrager zum Kondensieren des verdichteten Kältemittels unter Abgabe von Wärme an die Umgebung des Nutzfahrzeugs 3, einer Drosseleinrichtung z.B. in Form eines Expansionsventils zum Expandieren des kondensierten Kältemittels und einem als Verdampfer ausgebildeten Laderaumwärmeübertrager zum Verdampfen des expandierten Kältemittels unter Aufnahme von Wärme aus dem Laderaum 301. Neben dem Kältekreislauf weist die Transportkältemaschine 306 vorliegend zudem eine nicht dargestellte elektrische Heizeinrichtung zum Erwärmen des Laderaums 301 auf. Um den Laderaum 301 zu kühlen oder zu erwärmen, saugt die Transportkältemaschine 306 durch eine Eintrittsöffnung 307 in der Stirnwand 303 des Kofferaufbaus 300 Luft aus dem Laderaum 301 an. Die angesaugte Luft wird dann in dem Laderaumwärmeübertrager des Kältekreislaufs gekühlt oder in der elektrischen Heizeinrichtung erwärmt und sodann als gekühlte oder erwärmte Luft durch eine Austrittsöffnung 308 in der Stirnwand 303 des Kofferaufbaus 300 wieder zurück in den Laderaum 301 geblasen. Dabei kann der angesaugten Luft beim Kühlen im Laderaumwärmeübertrager neben Wärme auch Feuchtigkeit entzogen werden. Alternativ oder zusätzlich zu einer elektrischen Heizeinrichtung könnte auch der Kältekreislauf derart ausgebildet sein, dass die aus dem Laderaum 301 angesaugte Luft in dem Laderaumwärmeübertrager des Kältekreislaufs erwärmt werden kann, beispielsweise indem der Kältekreislauf in einem Betriebsmodus nach Art einer Wärmepumpe betrieben werden kann.

Das dargestellte und insoweit bevorzugte Nutzfahrzeug 3 weist eine Vielzahl an Nutzfahrzeugsensoren 309 - 317 auf. So sind im Laderaum 301 am Dach 302 des Kofferaufbaus 300 ein Laderaumtemperatursensor 309, der eingerichtet ist, einen für eine Temperatur im Laderaum 301 charakteristischen Parameter zu erfassen, sowie ein Laderaumfeuchtesensor 310 angeordnet, der eingerichtet ist, einen für eine Luftfeuchtigkeit im Laderaum 301 charakteristischen Parameter zu erfassen. Es versteht sich, dass der Laderaumtemperatursensor 309 und der Laderaumfeuchtesensor 310 auch an anderen Stellen des Sattelaufliegers 3 angeordnet sein können, beispielsweise in der in der Stirnwand 303 vorgesehenen Eintrittsöffnung 307.

Das Nutzfahrzeug 3 weist ferner drei Beladungszustandsensoren 311, 312 auf. Einer der Beladungszustandsensoren 311,312 ist vorliegend als Kamera 311 ausgebildet, die eingerichtet ist, ein Bild von einer Ladung im Laderaum 301 zu erfassen, das das Volumen und die Anordnung der Ladung im Laderaum 301 repräsentiert. Zudem sind zwei der Beladungszustandsensoren 311, 312 vorliegend als Achslastsensoren 312 ausgebildet, die eingerichtet sind, einen Parameter zu erfassen, der für das auf der jeweiligen Achse des Nutzfahrzeugs 3 lastende Gewicht und mithin das Gewicht der im Laderaum 301 aufgenommenen Ladung charakteristisch ist.

Die Transportkältemaschine 306 weist einen Umgebungstemperatursensor 313 auf. Der Umgebungstemperatursensor 313 ist eingerichtet, einen für eine Temperatur in der Umgebung des Nutzfahrzeugs 3 charakteristischen Parameter zu erfassen. Alternativ oder zusätzlich könnte ein entsprechender Umgebungstemperatursensor auch separat von der Transportkältemaschine 306 vorgesehen und beispielsweise außerhalb des Laderaums 301 am Kofferaufbau 300 angeordnet sein.

Das Nutzfahrzeug 3 weist ferner einen Nutzfahrzeugpositionssensor 314 (z.B. in Form eines GPS-Sensors) auf, der im dargestellten und insoweit bevorzugten Ausführungsbeispiel unterhalb des Kofferaufbaus 300 in der Nähe der Achsen des Nutzfahrzeugs 3 angeordnet ist. Der Nutzfahrzeugpositionssensor ist eingerichtet, einen für eine Position des Nutzfahrzeugs 3 charakteristischen Parameter zu erfassen.

Unterhalb des Kofferaufbaus 300 ist zudem ein Tankfüllstandsensor 315 angeordnet. Der Tankfüllstandsensor 315 ist eingerichtet, einen Parameter zu erfassen, der charakteristisch für einen Füllstand eines nicht dargestellten, beispielsweise unterhalb des Kofferaufbaus 300 angeordneten Dieseltanks des Nutzfahrzeugs 3 ist. Der Dieseltank ist beispielsweise dazu vorgesehen, einen nicht dargestellten Verbrennungsmotor der Transportkältemaschine 306 mit Dieselkraftstoff zu versorgen. In der Transportkältemaschine 306 ist zudem ein Batteriesensor 316 angeordnet, der eingerichtet ist, einen für einen Ladestand einer nicht dargestellten Batterie der Transportkältemaschine 306 charakteristischen Parameter zu erfassen. Dabei ist die Batterie beispielsweise eingerichtet, die elektrische Energie zum Starten des Verbrennungsmotors bereitzustellen. Alternativ könnte es sich bei der Transportkältemaschine 306 auch um eine rein elektrisch betriebene Transportkältemaschine 306 handeln. Dann könnte zweckmäßigerweise anstatt des Tankfüllstandsensors 315 und des in der Transportkältemaschine 306 angeordneten Batteriesensors 314 ein Batteriesensor zum Erfassen eines Ladestands einer Batterie vorgesehen sein, die eingerichtet ist, die Transportkältemaschine 306 mit elektrischer Energie zu versorgen.

Der Sattelauflieger 3 weist ferner einen im Bereich der Rückwand 304 des Kofferaufbaus 300 angeordneten Türöffnungssensor 317 (z.B. in Form eines Türöffnungsschalters) auf. Der Türöffnungssensor 317 ist eingerichtet zu erfassen, ob wenigstens eine der beiden Flügeltüren der Rückwand 304 geöffnet ist.

Es versteht sich, dass der Sattelauflieger 3 neben den Nutzfahrzeugsensoren 309 - 317 weitere Nutzfahrzeugsensoren aufweisen kann.

Die Nutzfahrzeugsensoren 309 - 317 sind über eine Kommunikationsverbindung 318 mit einer Kommunikationseinrichtung 319 beispielsweise in Form einer Telematikeinrichtung 319 verbunden. Dabei können die Nutzfahrzeugsensoren 309 - 312, 314, 315, 317, die nicht Teil der Transportkältemaschine 306 sind, beispielsweise direkt mit der Kommunikationseinrichtung 319 verbunden sein. Die Nutzfahrzeugsensoren 313, 316 der Transportkältemaschine 306 können dagegen beispielsweise indirekt mit der Kommunikationseinrichtung 319 verbunden sein, z.B. über ein Steuergerät der Transportkältemaschine 306. Unabhängig davon ist die Kommunikationsverbindung 318 beispielsweise eine Kommunikationsverbindung eines CAN-, K-Leitungs-, LIN- oder Flexray-Bussystems des Nutzfahrzeugs 3.

Die Nutzfahrzeugsensoren 309 - 314 sind jeweils eingerichtet, eine Sensorinformation, die den von dem jeweiligen Nutzfahrzeugsensor 309 - 314 erfassten jeweiligen Parameter repräsentiert, über die Kommunikationsverbindung 318 an die Telematikeinrichtung 319 zu senden. Die Nutzfahrzeugsensoren 315 - 317 sind jeweils eingerichtet, eine Temperierverhinderungsinformation, die den von dem jeweiligen Nutzfahrzeugsensor 315 - 317 erfassten jeweiligen Parameter repräsentiert, über die Kommunikationsverbindung 318 an die Telematikeinrichtung 319 zu senden.

Das Nutzfahrzeug 3 kann die Telematikeinrichtung 319 zum Beispiel verwenden, um Informationen (z.B. Sensorinformationen, Temperierverhinderungsinformationen, Steuerinformationen, usw.) über die Kommunikationsverbindung 101 mit der Servervorrichtung 2 des in Fig. 1 dargestellten Systems 1 auszutauschen (z.B. zu senden und/oder zu empfangen).

Fig. 4A-B zeigen ein Flussdiagramm 4 einer Ausführungsform eines Verfahrens gemäß der Erfindung. Im Folgenden wird beispielhaft angenommen, dass die Schritte 400 bis 420 durch die Servervorrichtung 2 des in Fig. 1 dargestellten Systems 1 ausgeführt werden.

In einem Schritt 401 werden erste aktuelle Temperiereinflussinformationen einer Vielzahl von Temperiereinflussinformationen erhalten und erfasst.

Die ersten aktuellen Temperiereinflussinformationen umfassen eine erste Auftragsinformation, die die erste Auftragstemperatur 103a, die erste Auftragszeit 104a, zu der der Laderaum 301 die erste Auftragstemperatur 103a aufweisen soll, und den ersten Auftragsort 102a repräsentiert, an dem der Laderaum 301 die erste Auftragstemperatur 103a aufweisen soll. Zudem repräsentiert die erste Auftragsinformation einen Typ der Transportkältemaschine 306 des Nutzfahrzeugs 3. Insoweit wird die erste Auftragsinformation beispielsweise durch die Servervorrichtung 2 über eine Kommunikationsverbindung von einer Servervorrichtung eines Auftraggebers empfangen, der das System 1 mit der Beladung des Sattelaufliegers 3 mit einer temperaturempfindlichen Ladung beauftragt.

Die ersten aktuellen Temperiereinflussinformationen umfassen ferner eine Mehrzahl von ersten Sensorinformationen, die von dem Laderaumtemperatursensor 309, dem Laderaumfeuchtesensor 310, den Beladungszustandsensoren 311,312, dem Umgebungstemperatursensor 313 und dem Nutzfahrzeugpositionssensor 314 des Nutzfahrzeugs 3 erfasste Parameter repräsentieren. Dementsprechend sind die durch die ersten Sensorinformationen repräsentierten Parameter charakteristisch für eine erste Temperatur im Laderaum 301, eine erste Luftfeuchtigkeit im Laderaum 301, einen ersten Beladungszustand im Laderaum 301 (vorliegend ist der Laderaum 301 leer), eine erste Temperatur in der Umgebung des Sattelaufliegers 3 und die erste Position 106a des Sattelaufliegers 3. Die ersten Sensorinformationen werden durch die Servervorrichtung 2 über die Kommunikationsverbindung 101 von der Telematikeinrichtung 319 des Nutzfahrzeugs 3 empfangen.

Die Servervorrichtung 2 bestimmt wenigstens teilweise basierend auf dem durch die erste Auftragsinformation repräsentierten Typ der Transportkältemaschine 306 (z.B. durch Abrufen aus einer entsprechenden Datenbank) als Teil der ersten Auftragsinformation eine Solltemperierleistung, mit der die Transportkältemaschine 306 den Laderaum 301 temperieren soll, wenn die Temperierfunktion der Transportkältemaschine 306 aktiviert ist. Zudem bestimmt die Servervorrichtung 2 wenigstens teilweise basierend auf dem durch die erste Auftragsinformation repräsentierten ersten Auftragsort 102a und dem durch eine der ersten Sensorinformationen repräsentierten, für die erste Position 106a des Sattelaufliegers 3 charakteristischen Parameter die erste Route 105a, eine erste Distanz und eine erste erwartete Fahrtzeit von der ersten Position 106a des Sattelaufliegers 3 zu dem ersten Auftragsort 102a als Teil der ersten Auftragsinformation. Insoweit wird die erste Auftragsinformation mithin als Ergebnis eines Bestimmens erhalten.

Die ersten aktuellen Temperiereinflussinformationen umfassen zudem eine erste Wetterinformation, die das erste erwartete Wetter 107a entlang der ersten Route 105a repräsentiert. Die erste Wetterinformation wird beispielsweise durch die Servervorrichtung 2 über eine Kommunikationsverbindung von einer Servervorrichtung eines Anbieters für Wetterinformation empfangen, beispielsweise nachdem die Servervorrichtung 2 die erste Route 105a an die Servervorrichtung des Anbieters für Wetterinformationen gesendet hat.

Weiter umfassen die ersten aktuellen Temperiereinflussinformationen beispielsweise erste bereitgehaltene Kältemaschineninformationen, die beispielsweise Alterungskennlinien und Herstellungsdaten von Komponenten der Transportkältemaschine 306 (z.B. dem Verdichter, den Wärmeübertragern und/oder der Drosseleinrichtung des Kältekreislaufs) repräsentieren. Die bereitgehaltenen Kältemaschineninformationen werden beispielsweise durch die Telematikeinrichtung 319 des Sattelaufliegers 3 bereitgehalten und durch die Servervorrichtung 2 über die Kommunikationsverbindung 101 von der Telematikeinrichtung 319 empfangen.

In einem Schritt 402 wird eine erste Temporäraktivierungszeit und/oder ein erster Temporäraktivierungsort wenigstens teilweise basierend auf den ersten aktuellen Temperiereinflussinformationen bestimmt. Die erste Temporäraktivierungszeit kann beispielsweise ein Datum und eine Tageszeit umfassen. Der erste Temporäraktivierungsort kann beispielsweise ein geographischer Ort entlang der ersten Route 105a sein. Der Schritt 402 stellt einen ersten Bestimmungsdurchgang dar.

In einem Schritt 403 werden mehrere erste abweichende Temperiereinflussinformationen der Vielzahl von Temperiereinflussinformationen erhalten und erfasst.

Die ersten abweichenden Temperiereinflussinformationen umfassen eine zweite Auftragsinformation, die den von dem ersten Auftragsort 102a abweichenden zweiten Auftragsort 102b und die von der ersten Auftragszeit 104a abweichende zweite Auftragszeit 104b repräsentiert. Zudem repräsentiert die zweite Auftragsinformation eine Art der Ladung, mit der der Sattelauflieger 3 an dem zweiten Auftragsort 102b beladen werden soll (z.B. Obst, etwa in Form von Bananen). Insoweit wird die zweite Auftragsinformation beispielsweise durch die Servervorrichtung 2 über eine Kommunikationsverbindung von der Servervorrichtung des Auftraggebers empfangen.

Die ersten abweichenden Temperiereinflussinformationen umfassen ferner zweite Sensorinformationen. Die zweiten Sensorinformationen repräsentieren einen von dem Laderaumtemperatursensor 309 des Sattelaufliegers 3 erfassten für eine zweite Temperatur im Laderaum 301 des Sattelaufliegers 3 charakteristischen Parameter sowie einen von dem Nutzfahrzeugpositionssensor 314 des Sattelaufliegers 3 erfassten für die zweite Position 106b des Sattelaufliegers 3 charakteristischen Parameter. Es versteht sich, dass die zweiten Sensorinformationen auch noch von anderen der Nutzfahrzeugsensoren 310 - 313 erfasste Parameter repräsentieren können. Zwingend erforderlich ist dies jedoch nicht.

Die Servervorrichtung 2 bestimmt basierend auf der durch die zweite Auftragsinformation repräsentierte Art der Ladung als Teil der zweiten Auftragsinformation die zweite Auftragstemperatur 103b, die von der ersten Auftragstemperatur 103a abweicht. Zudem bestimmt die Servervorrichtung 2 wenigstens teilweise basierend auf dem durch die zweite Auftragsinformation repräsentierten zweiten Auftragsort 102b und dem durch eine der zweiten Sensorinformationen repräsentierten, für die zweite Position 106b des Sattelaufliegers 3 charakteristischen Parameter die zweite Route 105b, die von der ersten Route 105a abweicht, als Teil der zweiten Auftragsinformation. Insoweit wird die zweite Auftragsinformation mithin als Ergebnis einer Bestimmung erhalten.

In einem Schritt 404 wird wenigstens teilweise basierend auf den ersten abweichenden Temperiereinflussinformationen bestimmt, ob eine zweite Temporäraktivierungszeit und/oder ein zweiter Temporäraktivierungsort bestimmt werden soll. Dazu werden beispielsweise die im Schritt 403 erhaltenen und erfassten ersten abweichenden Temperiereinflussinformationen mit den im Schritt 401 erhaltenen und erfassten ersten aktuellen Temperiereinflussinformationen verglichen. Dann kann beispielsweise bestimmt werden, dass die zweite Temporäraktivierungszeit und/oder der zweite Temporäraktivierungsort bestimmt werden soll, wenn die zeitliche Differenz zwischen der ersten Auftragszeit 104a, die durch die in Schritt 401 erhaltene erste Auftragsinformation repräsentiert wird, und der zweiten Auftragszeit 104b, die durch die in Schritt 403 erhaltene zweite Auftragsinformation repräsentiert wird, einen vorgegebenen Grenzwert übersteigt. Alternativ oder zusätzlich kann beispielsweise bestimmt werden, dass die zweite Temporäraktivierungszeit und/oder der zweite Temporäraktivierungsort bestimmt werden soll, wenn die Temperaturdifferenz zwischen der ersten Temperatur im Laderaum 301, die durch eine der in Schritt 401 erfassten ersten Sensorinformation repräsentiert wird, und der zweiten Temperatur im Laderaum 301, die durch eine der in Schritt 403 erfassten zweiten Sensorinformationen repräsentiert wird, einen vorgegebenen Grenzwert überschreitet.

Falls bestimmt wird, dass eine zweite Temporäraktivierungszeit und/oder ein zweiter Temporäraktivierungsort bestimmt werden soll, wird das Flussdiagramm 4 mit Schritt 406 fortgesetzt. Andernfalls erfolgt im Flussdiagramm 4 in Schritt 405 ein Sprung vor zu Schritt 410.

In dem Schritt 406 wird eine zweite Temporäraktivierungszeit und/oder ein zweiter Temporäraktivierungsort wenigstens teilweise basierend auf zweiten aktuellen Temperiereinflussinformationen der Vielzahl von Temperiereinflussinformationen bestimmt. Die zweiten aktuellen Temperiereinflussinformationen umfassen zum einen die im Schritt 403 erhaltenen und erfassten ersten abweichenden Temperiereinflussinformationen. Zum anderen umfassen die zweiten aktuellen Temperiereinflussinformationen die in Schritt 401 erhaltenen und erfassten Temperiereinflussinformationen, soweit diese nicht durch die im Schritt 403 erhaltenen und erfassten ersten abweichenden Temperiereinflussinformationen überholt sind.

In Schritt 407 wird wenigstens teilweise basierend auf der in Schritt 406 bestimmten zweiten Temporäraktivierungszeit und der in Schritt 402 bestimmten ersten Temporäraktivierungszeit und/oder dem in Schritt 406 bestimmten zweiten Temporäraktivierungsort und dem in Schritt 402 bestimmten ersten Temporäraktivierungsort bestimmt, ob eine Benachrichtigungsaktion ausgelöst werden soll. Beispielsweise kann bestimmt werden, dass die Benachrichtigungsaktion ausgelöst werden soll, wenn die zeitliche Differenz zwischen der ersten Temporäraktivierungszeit und der zweiten Temporäraktivierungszeit und/oder die geographische Differenz zwischen dem ersten Temporäraktivierungsort und dem zweiten Temporäraktivierungsort einen vorgegebenen Grenzwert (z.B. von 1 min, 2 min, 3 min oder 5 min und/oder von 500 m, 1000 m oder 2000 m) überschreitet.

Falls bestimmt wird, dass eine Benachrichtigungsaktion ausgelöst werden soll, wird das Flussdiagramm 4 mit Schritt 409 fortgesetzt. Andernfalls erfolgt im Flussdiagramm 4 in Schritt 408 ein Sprung vor zu Schritt 410.

In Schritt 409 wird die Benachrichtigungsaktion ausgelöst. Die Benachrichtigungsaktion kann beispielsweise umfassen, dass einem Nutzer, beispielsweise einem Fahrer des Zugfahrzeugs Z und/oder dem Auftraggeber, eine Benachrichtigungsinformation bereitgestellt wird, beispielsweise an der Transportkältemaschine 306 (z.B. über einen Bildschirm), in einer Fahrerkabine des Zugfahrzeugs Z (z.B. über einen Bildschirm), über ein (Online-)Portal, per E-Mail, per SMS und/oder über eine (Smartphone-)Applikation. Unabhängig davon kann die Benachrichtigungsinformation beispielsweise eine Information über die zeitliche Differenz zwischen der im Schritt 402 bestimmten ersten Temporäraktivierungszeit und der im Schritt 406 bestimmten zweiten Temporäraktivierungszeit und/oder den geographischen Abstand zwischen dem im Schritt 402 bestimmten ersten Temporäraktivierungsort und dem im Schritt 406 bestimmten zweiten Temporäraktivierungsort sein.

Die Schritte 403 bis 409 stellen einen zweiten Bestimmungsdurchgang dar.

In Schritt 410 wird bestimmt, ob ein weiterer Bestimmungsdurchgang durchgeführt werden soll. Beispielsweise kann bestimmt werden, dass ein weiterer Bestimmungsdurchgang durchgeführt werden soll, wenn die zuletzt bestimmte Temporäraktivierungszeit, also z.B. die im Schritt 406 bestimmte zweite Temporäraktivierungszeit, noch nicht erreicht ist und/oder der Sattelauflieger 3 den zuletzt bestimmten Temporäraktivierungsort, also z.B. den im Schritt 406 bestimmten zweiten Temporäraktivierungsort, noch nicht erreicht hat. Um dies zu bestimmen, kann die Servervorrichtung 2 beispielsweise kontinuierlich von dem Nutzfahrzeugpositionssensor 314 des Sattelaufliegers 3 stammende Sensorinformationen empfangen, die jeweils einen für eine Position des Sattelaufliegers 3 charakteristischen Parameter repräsentieren.

Wenn ein weiterer Bestimmungsdurchgang ausgeführt werden soll, erfolgt im Flussdiagramm 4 in Schritt 410 ein Sprung zurück zu Schritt 403. Andernfalls wird das Flussdiagramm 4 in Schritt 411 fortgesetzt.

In einem dritten Bestimmungsdurchgang werden in Schritt 403 mehrere zweite abweichende Temperiereinflussinformationen der Vielzahl von Temperiereinflussinformationen erhalten. Die zweiten abweichenden Temperiereinflussinformationen umfassen eine zweite Wetterinformation, die das zweite erwartete Wetter 107b entlang der zweiten Route 105b repräsentiert. Die zweite Wetterinformation wird beispielsweise durch die Servervorrichtung 2 über eine Kommunikationsverbindung von der Servervorrichtung des Anbieters für Wetterinformationen empfangen, beispielsweise nachdem die Servervorrichtung 2 die zweite Route 105b an die Servervorrichtung des Anbieters für Wetterinformationen gesendet hat.

Die zweiten abweichenden Temperiereinflussinformationen umfassen ferner eine Verkehrsinformation, die den Verkehr 108 in Form des Verkehrsstaus 108 auf der zweiten Route 105b repräsentiert. Die Verkehrsinformation wird beispielsweise durch die Servervorrichtung 2 über eine Kommunikationsverbindung von einer Servervorrichtung eines Anbieters für Verkehrsinformationen empfangen, beispielsweise nachdem die Servervorrichtung 2 die zweite Route 105b an die Servervorrichtung des Anbieters für Verkehrsinformationen gesendet hat.

Im dritten Bestimmungsdurchgang wird in Schritt 404 wenigstens teilweise basierend auf den zweiten abweichenden Temperiereinflussinformationen umfassend die das zweite erwartete Wetter 107b repräsentierende zweite Wetterinformation und die den Verkehr 108 repräsentierende Verkehrsinformation bestimmt, ob eine dritte Temporäraktivierungszeit und/oder ein dritter Temporäraktivierungsort bestimmt werden soll.

Falls bestimmt wird, dass eine dritte Temporäraktivierungszeit und/oder ein dritter Temporäraktivierungsort bestimmt werden soll, wird das Flussdiagramm 4 im dritten Bestimmungsdurchgang mit Schritt 406 fortgesetzt. Andernfalls erfolgt im Flussdiagramm 4 im dritten Bestimmungsdurchgang in Schritt 405 ein Sprung vor zu Schritt 410.

Im dritten Bestimmungsdurchgang wird im Schritt 406 eine dritte Temporäraktivierungszeit und/oder ein dritter Temporäraktivierungsort wenigstens teilweise basierend auf dritten aktuellen Temperiereinflussinformationen der Vielzahl von Temperierinformationen bestimmt. Die dritten aktuellen Temperiereinflussinformationen umfassen zum einen die im Schritt 403 des dritten Bestimmungsdurchgangs erhaltenen zweiten abweichenden Temperiereinflussinformationen umfassend die zweite Wetterinformation und die Verkehrsinformation. Zum anderen umfassen die dritten aktuellen Temperiereinflussinformationen die in Schritt 406 des zweiten Bestimmungsdurchgangs berücksichtigten zweiten aktuellen Temperiereinflussinformationen, soweit diese nicht durch die im Schritt 403 des dritten Bestimmungsdurchgangs erhaltenen zweiten abweichenden Temperiereinflussinformationen überholt sind.

Im dritten Bestimmungsdurchgang wird in Schritt 407 wenigstens teilweise basierend auf der im dritten Bestimmungsdurchgang bestimmten dritten Temporäraktivierungszeit und der im zweiten Bestimmungsdurchgang bestimmten zweiten Temporäraktivierungszeit und/oder dem im dritten Bestimmungsdurchgang bestimmten dritten Temporäraktivierungsort und dem im zweiten Bestimmungsdurchgang bestimmten zweiten Temporäraktivierungsort bestimmt, ob eine Benachrichtigungsaktion ausgelöst werden soll.

Falls bestimmt wird, dass eine Benachrichtigungsaktion ausgelöst werden soll, wird das Flussdiagramm 4 im dritten Bestimmungsdurchgang mit Schritt 409 fortgesetzt, in dem die Benachrichtigungsaktion ausgelöst wird. Andernfalls erfolgt im Flussdiagramm 4 in Schritt 408 des dritten Bestimmungsdurchgangs ein Sprung vor zu Schritt 410, in dem bestimmt wird, ob ein weiterer Bestimmungsdurchgang ausgeführt werden soll. Es versteht sich, dass beliebig viele die Schritte 403 bis 409 umfassende Bestimmungsdurchgänge beispielsweise in vorgegebenen und/oder regelmäßigen Abständen (z.B. zeitlichen Abständen) durchgeführt werden können, bis in Schritt 410 bestimmt wird, dass kein weiterer Bestimmungsdurchgang durchgeführt werden soll.

In Schritt 411 wird die zuletzt bestimmte Temporäraktivierungszeit, beispielsweise die im dritten Bestimmungsdurchgang in Schritt 406 bestimmte dritte Temporäraktivierungszeit, als die bestimmte Aktivierungszeit 109 ausgewählt. Alternativ oder zusätzlich wird in Schritt 411 der zuletzt bestimmte Temporäraktivierungsort, beispielsweise der im dritten Bestimmungsdurchgang in Schritt 406 bestimmte dritte Temporäraktivierungsort, als der bestimmte Aktivierungsort 110 ausgewählt.

In Schritt 412 wird bestimmt, ob die in Schritt 411 bestimmte Aktivierungszeit 109 erreicht ist und/oder der Sattelauflieger 3 den in Schritt 411 bestimmten Aktivierungsort 110 erreicht hat. Um zu bestimmten, ob der Sattelauflieger 3 den bestimmten Aktivierungsort 110 erreicht hat, kann die Servervorrichtung 2 beispielsweise kontinuierlich von dem Nutzfahrzeugpositionssensor 314 des Sattelaufliegers 3 stammende Sensorinformationen empfangen, die jeweils einen für eine Position des Sattelaufliegers 3 charakteristischen Parameter repräsentieren.

Die Schritte 410 bis 412 können beispielsweise teilweise gleichzeitig erfolgen. So kann beispielsweise in den Schritten 410 bis 412bestimmt werden, ob die jeweils zuletzt bestimmte Temporäraktivierungszeit erreicht ist und/oder ob der Sattelauflieger 3 den jeweils zuletzt bestimmten Temporäraktivierungsort erreicht hat. Wenn dann bestimmt wird, dass die zuletzt bestimmte Temporäraktivierungszeit erreicht ist und/oder der Sattelauflieger 3 den zuletzt bestimmten Temporäraktivierungsort erreicht hat, kann gleichzeitig (a) bestimmt werden, dass kein weiterer Bestimmungsdurchgang mehr durchgeführt werden soll (Schritt 410), (b) die zuletzt bestimmte Temporäraktivierungszeit als die bestimmte Aktivierungszeit 109 und/oder der zuletzt bestimmte Temporäraktivierungsort als der bestimmte Aktivierungsort 110 ausgewählt werden (Schritt 411) und (c) bestimmt werden, dass die bestimmte Aktivierungszeit 109 erreicht ist und/oder das Nutzfahrzeug 3 den bestimmten Aktivierungsort 110 erreicht hat (Schritt 412).

Wenn bestimmt wird, dass die bestimmte Aktivierungszeit 109 erreicht ist und/oder der Sattelauflieger 3 den bestimmten Aktivierungsort 110 erreicht hat, wird das Flussdiagramm 4 mit Schritt 412 fortgesetzt.

In Schritt 414 wird das Aktivieren der Temperierfunktion der Transportkältemaschine 306 bewirkt. Dazu kann die Servervorrichtung 2 beispielsweise eine entsprechende Steuerinformation über die Kommunikationsverbindung 101 an die Telematikeinrichtung 319 des Sattelaufliegers 3 senden, welche die Steuerinformation wiederum an die Transportkältemaschine 306 des Sattelaufliegers 3 weiterleiten kann.

Das Aktivieren der Temperierfunktion umfasst vorliegend das Einschalten und Aktivieren der Transportkältemaschine 306. Das Einschalten der Transportkältemaschine 306 bewirkt beispielsweise, dass die Transportkältemaschine 306 mit elektrischer Energie versorgt und ein Betriebssystem der Transportkältemaschine 306 geladen wird. Nach dem Einschalten ist die Transportkältemaschine 306 beispielsweise betriebsbereit. Das Aktivieren der Transportkältemaschine 306 bewirkt beispielsweise, dass die betriebsbereite Transportkältemaschine 306 von einem Zustand, in dem die Transportkältemaschine 306 den Laderaum 301 nicht temperiert, in einen Zustand versetzt wird, in dem die Transportkältemaschine 306 den Laderaum 301 aktiv temperiert, also vorliegend kühlt. Das Aktivieren der Transportkältemaschine 306 kann beispielsweise das Starten eines Verbrennungsmotors der Transportkältemaschine 306 umfassen, welcher mechanisch mit einem Generator gekoppelt ist und diesen (z.B. permanent) antreibt. Dabei ist der Generator eingerichtet, Komponenten der Transportkältemaschine 306 (z.B. den Verdichter, die elektrische Heizeinrichtung oder Lüfter) mit elektrischer Energie zu versorgen.

In Schritt 415 wird eine Aktivierungsinformation bereitgestellt, indem die Aktivierungsinformation erzeugt und gespeichert wird, beispielsweise in einem Langzeitspeicher der Servervorrichtung 2. Die Aktivierungsinformation repräsentiert die in Schritt 411 bestimmte Aktivierungszeit 109 und/oder den in Schritt 411 bestimmten Aktivierungsort 110 sowie die in den Schritten 402 und 406 bestimmten Temporäraktivierungszeiten und/oder Temporäraktivierungsorte. Zudem umfasst die Aktivierungsinformation die Vielzahl der erhaltenen und erfassten Temperiereinflussinformationen, unter Berücksichtigung derer die Temporäraktivierungszeiten und/oder Temporäraktivierungsorte in den Schritten 402 und 406 sowie die Aktivierungszeit 109 und/oder der Aktivierungsort 110 im Schritt 411 bestimmt worden sind.

In Schritt 416 wird wenigstens eine weitere Temperiereinflussinformation erhalten und/oder erfasst. Die wenigstens eine weitere Temperiereinflussinformation kann beispielsweise eine weitere Auftragsinformation, eine weitere Sensorinformation und/oder eine weitere Wetterinformation umfassen. Vorliegend wird beispielsweise davon ausgegangen, dass die weitere Temperiereinflussinformation eine weitere Sensorinformation ist, die einen von dem Laderaumtemperatursensor 309 des Sattelaufliegers 3 erfassten für eine weitere Temperatur im Laderaum 301 charakteristischen Parameter repräsentiert.

In Schritt 417 wird wenigstens teilweise basierend auf der weiteren Temperiereinflussinformation bestimmt, ob voraussichtlich wenigstens im Wesentlichen bei Erreichen einer aktuellen Auftragszeit 104b und/oder eines aktuellen Auftragsorts 102b im Laderaum 301 wenigstens im Wesentlichen eine aktuelle Auftragstemperatur 103b erreicht wird. Vorliegend ist die aktuelle Auftragstemperatur 103b, die aktuelle Auftragszeit 104b und der aktuelle Auftragsort 102b die zweite Auftragstemperatur 103b, die zweite Auftragszeit 104b bzw. der zweite Auftragsort 102b, unter deren Berücksichtigung die Aktivierungszeit 109 und/oder der Aktivierungsort 110 bestimmt worden ist. Es versteht sich jedoch, dass die aktuelle Auftragszeit, der aktuelle Auftragsort und/oder die aktuelle Auftragstemperatur in Schritt 417 auch von der Auftragstemperatur, der Auftragszeit bzw. dem Auftragsort abweichen kann, unter deren Berücksichtigung die Aktivierungszeit 109 und/oder der Aktivierungsort 110 bestimmt worden ist, beispielsweise wenn die wenigstens eine weitere Temperiereinflussinformation eine weitere Auftragsinformation umfasst, die eine weitere Auftragstemperatur, eine weitere Auftragszeit und/oder einen weiteren Auftragsort repräsentiert. Abgesehen von der weiteren Temperiereinflussinformation erfolgt das Bestimmen, ob voraussichtlich wenigstens im Wesentlichen bei Erreichen der aktuellen Auftragszeit 104b und/oder des aktuellen Auftragsorts 102b im Laderaum 301 wenigstens im Wesentlichen die aktuelle Auftragstemperatur 103b erreicht wird, beispielsweise wenigstens teilweise basierend auf den Temperiereinflussinformation, unter deren Berücksichtigung die Aktivierungszeit 109 und/oder der Aktivierungsort 110 bestimmt worden ist, soweit diese nicht durch die wenigstens eine weitere Temperiereinflussinformation überholt sind.

Das Bestimmen, ob voraussichtlich wenigstens im Wesentlichen bei Erreichen der aktuellen Auftragszeit 104b und/oder des aktuellen Auftragsorts 102b im Laderaum 301 wenigstens im Wesentlichen die aktuelle Auftragstemperatur 103b erreicht wird, umfasst beispielsweise, dass bestimmt wird, ob voraussichtlich vor oder nach dem Erreichen der aktuellen Auftragszeit 104b und/oder des aktuellen Auftragsorts 102b im Laderaum 301 wenigstens im Wesentlichen die aktuelle Auftragstemperatur 103b erreicht wird.

Falls bestimmt wird, dass voraussichtlich nicht wenigstens im Wesentlichen bei Erreichen der aktuellen Auftragszeit 104b und/oder des aktuellen Auftragsorts 102b im Laderaum 301 wenigstens im Wesentlichen die aktuelle Auftragstemperatur 103b erreicht wird, wird das Flussdiagramm 4 mit Schritt 419 fortgesetzt. Andernfalls erfolgt im Flussdiagramm 4 in Schritt 418 ein Sprung vor zu Schritt 420.

In Schritt 419 wird ein Verändern der Temperierleistung der Transportkältemaschine 306 bewirkt. Insbesondere wird in Schritt 419 eine Verringerung der Temperierleistung der Transportkältemaschine 306 bewirkt, wenn in Schritt 417 bestimmt wird, dass voraussichtlich vor dem Erreichen der aktuellen Auftragszeit 104b und/oder des aktuellen Auftragsorts 102b im Laderaum 301 wenigstens im Wesentlichen die aktuelle Auftragstemperatur 103b erreicht wird. Wenn in Schritt 417 dagegen bestimmt wird, dass voraussichtlich erst nach dem Erreichen der aktuellen Auftragszeit 104b und/oder des aktuellen Auftragsorts 102b im Laderaum 301 wenigstens im Wesentlichen die aktuelle Auftragstemperatur 103b erreicht wird, wird in Schritt 419 insbesondere ein Steigern der Temperierleistung der Transportkältemaschine 306 bewirkt. Zum Bewirken des Veränderns der Temperierleistung der Transportkältemaschine 306 kann die Servervorrichtung 2 beispielsweise eine entsprechende Steuerinformation über die Kommunikationsverbindung 101 an die Telematikeinrichtung 319 des Sattelaufliegers 3 senden, die die Steuerinformation wiederum an die Transportkältemaschine 306 des Sattelaufliegers 3 weiterleiten kann.

Die Schritte 416 bis 417 stellen einen ersten Überprüfungsdurchgang dar.

In Schritt 420 wird bestimmt, ob ein weiterer Überprüfungsdurchgang durchgeführt werden soll. Beispielsweise kann bestimmt werden, dass ein weiterer Überprüfungsdurchgang durchgeführt werden soll, wenn die aktuelle Auftragszeit 104b noch nicht erreicht ist und/oder der Sattelauflieger 3 den aktuellen Auftragsort 102b noch nicht erreicht hat. Um letzteres zu bestimmen, kann die Servervorrichtung 2 beispielsweise kontinuierlich von dem Nutzfahrzeugpositionssensor 314 des Sattelaufliegers 3 stammende Sensorinformationen empfangen, die jeweils einen für eine Position des Sattelaufliegers 3 charakteristischen Parameter repräsentieren.

Wenn ein weiterer Überprüfungsdurchgang durchgeführt werden soll, erfolgt im Flussdiagramm 4 in Schritt 420 ein Sprung zurück zu Schritt 416, woraufhin die Schritte 416 bis 419 erneut durchlaufen werden. Es versteht sich, dass in unterschiedlichen Überprüfungsdurchgängen in Schritt 416 unterschiedliche weitere Temperiereinflussinformationen erhalten und/oder erfasst werden können.

Das Flussdiagramm 4 endet beispielsweise, wenn die aktuelle Auftragszeit 104b erreicht ist und/oder der Sattelauflieger 3 den aktuellen Auftragsort 102b erreicht hat und mithin kein weiterer Überprüfungsdurchgang durchgeführt werden soll.

Das Flussdiagramm 4 kann einen optionalen Schritt 400 umfassen, in dem eine Vielzahl von historischen Aktivierungsinformationen bereitgehalten werden, die von einer Vielzahl von Nutzfahrzeugen stammen, wobei jede der historischen Aktivierungsinformationen für ein jeweiliges der Nutzfahrzeuge wenigstens eine bestimmte Aktivierungszeit und/oder einen bestimmten Aktivierungsort repräsentiert und eine Vielzahl von Temperiereinflussinformationen umfasst, unter Berücksichtigung derer die bestimmte Aktivierungszeit und/oder der bestimmte Aktivierungsort bestimmt worden ist. Dann kann das Bestimmen der Temporäraktivierungszeit in Schritt 402 und das Bestimmen der wenigstens einen Temporäraktivierungszeit in Schritt 406 ferner wenigstens teilweise basierend auf der Vielzahl von historischen Aktivierungsinformationen erfolgen.

Zusätzlich zu den dargestellten Schritten kann das Verfahren umfassen, dass bestimmt wird, ob eine Temperierverhinderungsfunktion aktiviert ist, die das Aktivieren der Temperierfunktion der Transportkältemaschine verhindert. Dies kann wenigstens teilweise basierend auf den von dem Tankfüllstandsensor 315, dem Batteriesensor 316 und dem Türöffnungssensor 317 des Nutzfahrzeugs 3 stammenden Temperierverhinderungsinformationen erfolgen, die die Servervorrichtung 2 über die Kommunikationsverbindung 101 von der Telematikeinrichtung 319 des Sattelaufliegers 3 empfangen kann. Dann kann beispielsweise bestimmt werden, dass die Temperierverhinderungsaktion aktiviert ist, wenn die von dem Tankfüllstandsensor 315 stammende Temperierverhinderungsinformation einen Tankfüllstand repräsentiert, der unterhalb eines vorgegebenen Grenzwerts ist, wenn die von dem Batteriesensor 316 stammende Temperierverhinderungsinformation einen Ladestand der Batterie repräsentiert, der unterhalb eines vorgegebenen Grenzwerts ist, oder wenn die von dem Türöffnungssensor 317 stammende Temperierverhinderungsinformation charakteristisch dafür ist, dass eine Tür der Rückwand 304 des Kofferaufbaus 300 geöffnet ist. Wenn dann bestimmt wird, dass die Temperierverhinderungsfunktion aktiviert ist, kann eine Benachrichtigungsaktion ausgelöst werden. Die Benachrichtigungsaktion kann beispielsweise umfassen, dass einem Nutzer, beispielsweise einem Fahrer des Zugfahrzeugs Z und/oder dem Auftraggeber, eine Benachrichtigungsinformation (z.B. darüber, dass das Aktivieren der Temperierfunktion verhindert wird) bereitgestellt wird, beispielsweise an der Transportkältemaschine 306 (z.B. über einen Bildschirm), in einer Fahrerkabine des Zugfahrzeugs Z (z.B. über einen Bildschirm), über ein (Online-)Portal, per E-Mail, per SMS und/oder über eine (Smartphone-)Applikation. Das Bestimmen, ob die Temperierverhinderungsfunktion aktiviert ist, und, zutreffendenfalls, das Bewirken der Benachrichtigungsaktion kann beispielsweise parallel zu den Schritten 400 bis 412 erfolgen.

Die in dieser Spezifikation beschriebenen beispielhaften Ausführungsformen der vorliegenden Erfindung sollen auch in allen Kombination miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in dem Flussdiagramm ist nicht zwingend, alternativ Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten" "enthalten" und dergleichen schließen weitere Elemente oder Schritte nicht aus. Unter der Formulierung "wenigstens teilweise" fallen sowohl der Fall "teilweise" als auch der Fall "vollständig". Die Formulierung und/oder soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktion mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren umfassend:
- Erhalten und/oder Erfassen (401,403) einer Mehrzahl von Temperiereinflussinformationen umfassend:
- wenigstens eine Auftragsinformation, wobei die wenigstens eine Auftragsinformation eine Auftragstemperatur (103a,103b) und eine Auftragszeit (104a,104b), zu der ein Laderaum (301) eines Nutzfahrzeugs (3) die Auftragstemperatur (103a,103b) aufweisen soll, und/oder einen Auftragsort (102a,102b), an dem ein Laderaum (301) eines Nutzfahrzeugs (3) die Auftragstemperatur (103a,103b) aufweisen soll, repräsentiert;
- eine oder mehrere Sensorinformationen, wobei jede der wenigstens einen Sensorinformation wenigstens einen durch einen jeweiligen Nutzfahrzeugsensor (309,310,311,312,313,314) des Nutzfahrzeugs (3) erfassten jeweiligen Parameter repräsentiert;
- Bestimmen einer Aktivierungszeit (109) und/oder eines Aktivierungsorts (110) wenigstens teilweise basierend auf der Mehrzahl von Temperiereinflussinformationen, um unter Berücksichtigung der bestimmten Aktivierungszeit (109) und/oder des bestimmten Aktivierungsorts (110) eine Temperierfunktion einer Transportkältemaschine (306) des Nutzfahrzeugs (3) zu aktivieren, wobei die Transportkältemaschine (306) eingerichtet ist, bei aktivierter Temperierfunktion den Laderaum (301) des Nutzfahrzeugs (3) zu temperieren.

2. Verfahren nach Anspruch 1, ferner umfassend:
- Bestimmen (412), ob die bestimmte Aktivierungszeit (109) erreicht ist und/oder das Nutzfahrzeug (3) den bestimmten Aktivierungsort (110) erreicht hat;
- wenn bestimmt wird, dass die bestimmte Aktivierungszeit (109) erreicht ist und/oder das Nutzfahrzeug (3) den bestimmten Aktivierungsort (110) erreicht hat, Bewirken des Aktivierens und/oder Aktivieren (414) der Temperierfunktion der Transportkältemaschine (306).

3. Verfahren nach Anspruch 1 oder 2, wobei die wenigstens eine Auftragsinformation ferner repräsentiert:
- eine oder mehrere Eigenschaften wenigstens einer Ladung, mit der der Laderaum (301), insbesondere an dem Auftragsort (102a,102b), beladen werden soll; und/oder
- eine oder mehrere Eigenschaften des Nutzfahrzeugs (3), insbesondere der Transportkältemaschine (306); und/oder
- wenigstens eine Route (105a,105b), Distanz und/oder erwartete Fahrtzeit von einer Nutzfahrzeugposition (106a,106b) des Nutzfahrzeugs (3) zu dem Auftragsort (102a,102b).

4. Verfahren nach einem der Ansprüche 1 bis 3, wobei der wenigstens eine durch die wenigstens eine Sensorinformation repräsentierte Parameter durch einen oder mehrere der folgenden Nutzfahrzeugsensoren erfasst wird:
- Laderaumzustandsensor (309,310,311,312);
- Laderaumtemperatursensor (309);
- Laderaumfeuchtesensor (310);
- Beladungszustandsensor (311,312);
- Umgebungszustandsensor (313);
- Umgebungstemperatursensor (313);
- Nutzfahrzeugpositionssensor (314); und/oder
- Kältemittelfüllstandsensor.

5. Verfahren nach einem der Ansprüche 1 bis 4, wobei die Mehrzahl der Temperiereinflussinformationen ferner umfasst:
- eine oder mehrere Umweltinformationen, beispielsweise Wetterinformation und/oder Verkehrsinformation; und/oder
- eine oder mehrere bereitgehaltene Kältemaschineninformationen, wobei jede der wenigstens einen bereitgehaltenen Kältemaschineninformationen wenigstens eine jeweilige Eigenschaft, beispielsweise eine Alterungskennlinie und/oder ein Herstellungsdatum, und/oder wenigstens einen jeweiligen Zustand, beispielsweise einen Kältemittelfüllstand, der Transportkältemaschine (306) und/oder einer jeweiligen Komponente der Transportkältemaschine (306) repräsentiert.

6. Verfahren nach einem der Ansprüche 1 bis 5, wobei das Bestimmen der Aktivierungszeit (109) und/oder des Aktivierungsorts (110) umfasst:
- wenigstens zwei Bestimmungsdurchgänge jeweils umfassend:
- Bestimmen (402,406) einer Temporäraktivierungszeit und/oder eines Temporäraktivierungsorts wenigstens teilweise basierend auf aktuellen Temperiereinflussinformationen der Mehrzahl von Temperiereinflussinformationen;
wobei in wenigstens einem der Bestimmungsdurchgänge die aktuellen Temperiereinflussinformationen wenigstens eine abweichende Temperiereinflussinformation umfassen, die sich von den aktuellen Temperiereinflussinformationen des vorhergehenden Bestimmungsdurchgangs unterscheidet;
- Auswählen (411) der in einem der Bestimmungsdurchgänge bestimmten Temporäraktivierungszeit als die bestimmte Aktivierungszeit (109) und/oder des in einem der Bestimmungsdurchgänge bestimmten Temporäraktivierungsorts als den bestimmten Aktivierungsort (110).

7. Verfahren nach Anspruch 6, wobei wenigstens einer der Bestimmungsdurchgänge ferner umfasst:
- Bestimmen (404) wenigstens teilweise basierend auf der wenigstens einen abweichenden Temperiereinflussinformation, ob die Temporäraktivierungszeit und/oder der Temporäraktivierungsort bestimmt werden soll, wobei das Bestimmen der Temporäraktivierungszeit und/oder des Temporäraktivierungsorts nur dann erfolgt, wenn bestimmt wird, dass die Temporäraktivierungszeit und/oder der Temporäraktivierungsort bestimmt werden soll.

8. Verfahren nach Anspruch 6 oder 7, wobei wenigstens einer der Bestimmungsdurchgänge ferner umfasst:
- Bestimmen (407) wenigstens teilweise basierend auf der bestimmten Temporäraktivierungszeit und der im vorhergehenden Bestimmungsdurchgang bestimmten Temporäraktivierungszeit und/oder dem bestimmten Temporäraktivierungsort und dem im vorhergehenden Bestimmungsdurchgang bestimmten Temporäraktivierungsort, ob eine Benachrichtigungsaktion ausgelöst werden soll;
- wenn bestimmt wird, dass die Benachrichtigungsaktion ausgelöst werden soll, Bewirken des Auslösens und/oder Auslösen (409) der Benachrichtigungsaktion.

9. Verfahren nach einem der Ansprüche 1 bis 8, ferner umfassend:
- Bereitstellen (415) wenigstens einer Aktivierungsinformation, wobei die wenigstens eine Aktivierungsinformation wenigstens die bestimmte Aktivierungszeit (109) und/oder den bestimmten Aktivierungsort (110) repräsentiert und wenigstens teilweise die Mehrzahl von Temperiereinflussinformationen umfasst.

10. Verfahren nach einem der Ansprüche 1 bis 9, ferner umfassend:
- Bereithalten (400) einer Vielzahl von historischen Aktivierungsinformationen, die von einer Vielzahl von Nutzfahrzeugen stammen, wobei jede der historischen Aktivierungsinformationen für ein jeweiliges der Nutzfahrzeuge wenigstens eine bestimmte Aktivierungszeit (109) und/oder einen bestimmten Aktivierungsort (110) repräsentiert und eine Mehrzahl von Temperiereinflussinformationen, unter Berücksichtigung derer die bestimmte Aktivierungszeit (109) und/oder der bestimmte Aktivierungsort (110) bestimmt worden ist, umfasst, wobei das Bestimmen der Aktivierungszeit (109) und/oder des Aktivierungsorts (110) ferner wenigstens teilweise basierend auf der Vielzahl von historischen Aktivierungsinformationen erfolgt.

11. Verfahren nach einem der Ansprüche 1 bis 10, ferner umfassend einen oder mehrere Überprüfungsdurchgänge jeweils umfassend:
- Erhalten und/oder Erfassen (416), insbesondere nach dem Bestimmen der Aktivierungszeit (109) und/oder des Aktivierungsorts (110), wenigstens einer weiteren Temperiereinflussinformation;
- Bestimmen (417) wenigstens teilweise basierend auf der wenigstens einen weiteren Temperiereinflussinformation, ob voraussichtlich wenigstens im Wesentlichen bei Erreichen einer aktuellen Auftragszeit (104a,104b) und/oder eines aktuellen Auftragsorts (102a,102b) im Laderaum (301) wenigstens im Wesentlichen eine aktuelle Auftragstemperatur (103a,103b) erreicht wird;
- wenn bestimmt wird, dass voraussichtlich nicht wenigstens im Wesentlichen bei Erreichen der aktuellen Auftragszeit (104a,104b) und/oder des aktuellen Auftragsorts (102a,102b) im Laderaum (301) wenigstens im Wesentlichen die aktuelle Auftragstemperatur (103a,103b) erreicht wird, Bewirken eines Veränderns und/oder Verändern (419) einer Temperierleistung der Transportkältemaschine (306).

12. Verfahren nach einem der Ansprüche 1 bis 11, ferner umfassend:
- Bestimmen, ob eine das Aktivieren der Temperierfunktion verhindernde Temperierverhinderungsfunktion aktiviert ist;
- wenn bestimmt wird, dass die Temperierverhinderungsfunktion aktiviert ist, Bewirken eines Auslösens und/oder Auslösen einer Benachrichtigungsaktion.

13. Servervorrichtung umfassend Mittel eingerichtet zur Ausführung des Verfahrens nach einem der Ansprüche 1 bis 12.

14. System umfassend:
- eine Servervorrichtung (2) nach Anspruch 13; und
- ein Nutzfahrzeug (3) umfassend eine Transportkältemaschine (306).

15. Computerprogramm umfassend Programmanweisungen, die dazu ausgebildet sind, bei Ausführung durch wenigstens einen Prozessor (200) eines Servers den Server zu veranlassen, das Verfahren nach einem der Ansprüche 1 bis 12 auszuführen.
